# EUROPÄISCHE PATENTANMELDUNG

(11) **EP 3 173 449 A1**
(43) Veröffentlichungstag der Anmeldung: **31.05.2017**
(21) Anmeldenummer: 15196848.4
(22) Anmeldetag: 27.11.2015
(51) Int. Cl.: C09J 7/00, A44B 18/00, B27D 1/00, B29C 39/00, B29C 39/02, E06B 9/00, B82Y 40/00, B29C 37/00, B29C 59/02

(54) **VERBUND AUS ZWEI FESTKÖRPERN**

(71) Anmelder: BASF Coatings GmbH, 48165 Münster (DE)
(72) Erfinder: KUES, Jan-Bernd, 48165 Münster (DE); LENZ, Jörg, 48165 Münster (DE)
(74) Vertreter: Leifert & Steffan

(57) **Zusammenfassung**

Die vorliegende Erfindung betrifft einen Verbund aus zwei Festkörpern, die über eine Kontaktfläche adhäsiv miteinander verbunden sind, wobei die Adhäsion durch eine oberflächige Feinstrukturierung bewirkt wird und die Kontaktflächen beider Festkörper des Verbundes eine Feinstrukturierung aufweisen.

## Beschreibung

Die vorliegende Erfindung betrifft einen Verbund aus zwei Festkörpern, die über eine Kontaktfläche adhäsiv miteinander verbunden sind, wobei die Adhäsion durch eine oberflächige Feinstrukturierung bewirkt wird, die herstellbar ist durch ein Verfahren zur Herstellung von feinstrukturierten beschichteten Oberflächen mit einem Aspektverhältnis von mindestens 0,5 zur Beeinflussung der Adhäsion umfassend die Schritte
a) Auftragen mindestens einer Beschichtungsmasse auf mindestens ein Substrat;
b) Formen einer Feinstruktur durch eine Matrize, die das Negativ einer Feinstruktur aufweist, wobei
   b1) die Matrize gegen die Beschichtungsmasse auf dem Substrat gedrückt wird oder
   b2) das Substrat aus Schritt a) die Matrize enthält;
c) Härten der so erhaltenen feinstrukturierten Beschichtungsmasse unter Erhalt einer im Wesentlichen gehärteten Beschichtung;
d) Trennen der feinstrukturierten Beschichtung von der Matrize, wobei die Schritte d) und c) auch in umgekehrter Reihenfolge durchgeführt werden können, und
   wobei
   - die Beschichtungsmasse in lösungsmittelfreiem Zustand vor dem Auftragen auf das Substrat eine Viskosität [Rotationsviskosimetrie nach DIN 53018-1 mit Platte/Kegel-Geometrie bei 25°C; Temperierung: Peltier; Messeinrichtung: HC 60/1 bei einem Schergefälle D von 10 - 1.000 1*s-1] unter 10 Pas und
   - die gehärtete Beschichtung ein E-Modul [Indentation mit Berkovich-Spitze, Vorlast zwischen 0,1 und 1 mN je nach Modul der zu bestimmenden Probe; Eindrückzeit: 10 s; Haltezeit 30 s und Rückzugzeit 10 s, Kalibrierung auf Polycarbonat] von mindestens 1 und bis zu 1.000 MPa aufweist.

Haftverbünde zwischen gleichartigen oder verschiedenartigen Festkörpern, die zum einen zuverlässig vorbestimmte Haftkräfte ausbilden und andererseits reversibel und rückstandsfrei wieder voneinander getrennt werden können, besitzen technisch einen breiten Anwendungsbereich. So sind im Stand der Technik schon seit langem sogenannte mechanische Haftverschlüsse bekannt, die dazu genutzt werden gleichartige oder unterschiedliche Materialien miteinander reversibel zu verbinden. Diese mechanischen Haftverschlüsse agieren dabei beispielsweise wie Reißverschlüsse oder Kletthaftverschlüsse. Bei dieser Art von Haftverschlüssen wird eine wirksame Haftung immer durch eine mechanische Verankerung herbeigeführt, wie beispielsweise durch Haken und Ösen.

Ein Haftverschluss für Einwegtextilien sowie ein Verfahren zu dessen Herstellung ist in der WO 94/23610 A1 beschrieben, bei dem zumindest ein Teil des mechanischen Verschlusses aus einem strukturierten Thermoplasten ("mushroom"-Typ Haken) besteht. Die Haftverbindung zwischen den Materialien wird ausschließlich durch einen mechanische Verankerung erzielt. Nachteilig ist allerdings, dass eine Mehrfachverwendung dieses Haftverschlusses nicht möglich ist.

In der WO95/11945 A1 werden strukturierte Haftklebstoffe, sogenannte "pressure sensitive adhesives", beschrieben, bei denen die Haftwirkung des Klebstoffes in den Grenzen der bekannten Eigenschaften eines "pressure sensitive adhesive" gezielt durch die Kombination von Mikrostruktur und den rheologischen Eigenschaften des Klebstoffes beeinflusst werden kann.

Es ist weiterhin bekannt, dass feinstrukturierte Oberflächen eine erhöhte Adhäsionsfähigkeit besitzen. Eine besondere Fähigkeit solcher Oberflächen ist insbesondere ihre Trockenadhäsivität. Unter Trockenadhäsivität wird im Rahmen dieser Erfindung die Ausbildung von adhäsiven Kräften zwischen Oberflächen ohne haftvermittelnde Stoffe, wie Klebstoffe, verstanden. Solche Haftverbindungen zeichnen sich auch dadurch aus, dass sie sich ohne Rückstände wieder entfernen lassen.

Entsprechende Haftsysteme sind beispielsweise auch aus der Natur, z.B. bei Gecko-Beinen oder an Insekten, bekannt (siehe auch WO 01/49776 A2). Man nimmt an, dass bei solchen Systemen die Haftkräfte auf van-der-Waals-Kräften basieren. Die Strukturierung der Oberfläche führt bei Kontaktierung zu einer sehr starken Vergrößerung der Kontaktfläche, und damit auch der Stärke der bei der Kontaktierung ausgebildeten Adhäsionskräfte.

Solche Oberflächen sind meistens feinstrukturiert. Dies bedeutet, dass sie Vertiefungen oder Vorsprünge mit einer Strukturierung von unter einem Millimeter aufweisen. Mit Vorteil sind es mikrostrukturierte Oberflächen. Dies bedeutet, dass die Struktur der Oberfläche, d.h. die Vorsprünge und/oder Vertiefungen, mindestens eine Dimension im Bereich von mindestens 100 nm, bevorzugt mindestens 150 nm, besonders bevorzugt mindestens 200 nm, ganz besonders bevorzugt mindestens 250 nm und unter 1 mm, bevorzugt unter 750 µm, besonders bevorzugt unter 500 µm, ganz besonders bevorzugt unter 250 µm, insbesondere unter 100 µm, speziell unter 50 µm, sogar unter 30 µm und durchaus unter 20 µm aufweisen.

Das in der WO 01/49776 A2 beschriebene Verfahren zielt auf die Herstellung von hierarchischen Oberflächenstrukturen ab. Zur Herstellung solcher Oberflächen werden generell mehrstufige komplexe Verfahren benötigt, wodurch eine industrielle Verwendung -gerade für großflächige Anwendungen - sehr kostspielig ist.

Die DE102004012067 und die DE10325372 beschreiben jeweils Verfahren zur Herstellung von Haftelementen, die dem Prinzip der Gecko-Beine ähneln. Hierbei wird während der Extrusion eines Elastomers eine Feinstrukturierung auf einer der beiden Oberflächen als integraler Bestandteil des Elastomers erzeugt. Dieses Verfahren ist allerdings auf die Verwendung von Elastomeren limitiert, die entsprechende visko-elastische Eigenschaften aufweisen. Zudem ist für eine gute Haftwirkung des strukturierten Elastomers immer eine glatte Oberfläche notwendig. Weitere Verfahren zur Herstellung von mikrostrukturierten Oberflächen, die auf einem ähnlichen Haftprinzip auf glatten Oberflächen beruhen, sind in der WO2009/053714 und WO2013/154582 dargestellt. Diese Verfahren weisen jedoch Limitationen in Hinblick auf einen kostengünstigen, großindustriellen Rolle-zu-Rolle-Prozess für großflächige Anwendungen auf.

Ein Verfahren der eingangs genannten Art ist ein kontinuierliches und somit kostengünstiges Rolle-zu-Rolle-Verfahren und ist beispielsweise in der WO2012/004319 A1 beschrieben. Problematisch ist jedoch, dass die mit diesem Verfahren erzeugten Oberflächen keine ausreichenden Haftwerte hinsichtlich ihrer Scher- und Peelkräfte für die Anforderungen vieler Anwendungsbereiche aufweisen. So zeigen nach diesem Verfahren hergestellte Oberflächen lediglich eine geringe Adhäsion auf glatten Oberflächen, was zu einer starken Limitierung ihres Anwendungsbereiches führt.

Die WO03/099951 A1 beschreibt die Herstellung von mikrostrukturierten Oberflächen mit gesteigerter Adhäsion und die reversible Haftverbindung strukturierter Substrate. Die vertikale Ablösekraft zur Trennung der Materialien ist möglichst winkelunabhängig. Dies führt dazu, dass das Auftrennen eines Verbundes immer mit viel Kraftaufwand verbunden, was zu einer Schädigung der unstrukturierten Oberflächen der verwendeten Substrate führen kann. Die Adhäsion zwischen den Substraten beruht auf Van-der-Waals-Kräften zwischen den Kopfteilen der einzelnen Mikrostrukturelemente und ist vollkommen verankerungsfrei. Zur Erzeugung einer ausreichenden Haftwirkung, müssen die mikrostrukturierten Haftelemente relativ zur Oberfläche geneigt sein und die Elastizität oder Biegefestigkeit der Elemente muss sich in einer Zugrichtung ändern.

Vor dem Hintergrund des Standes der Technik war es nunmehr Aufgabe der vorliegenden Erfindung einen kostengünstigen Verbund aus zwei Festkörpern zur Verfügung zu stellen, bei dem die zwei Festköper reversibel voneinander getrennt werden können. Der Verbund soll zum einen an der Kontaktfläche der Festkörper hohe Scherkräfte aufweisen und sich zum anderen durch geringe Peelkräfte an der Kontaktfläche auszeichnen. Hohe Scherkräfte sorgen für eine gute Haftwirkung zwischen den Festkörpern, wohingegen niedrigen Peelkräfte dafür Sorge tragen, dass sich die beiden Festkörper reversibel voneinander trennen lassen, ohne das es zu einer Beschädigung der Oberflächen der Festkörper kommt. Außerdem ist es Aufgabe der Erfindung, praktische Anwendungen des erfindungsgemäßen Verbundes anzugeben.

Überraschenderweise konnte die vorstehende Aufgabe gelöst werden durch einen Verbund aus einem ersten Festkörper und einem zweiten Festköper, die über eine Kontaktfläche adhäsiv miteinander verbunden sind, wobei die Adhäsion durch eine oberflächige Feinstrukturierung bewirkt wird, die herstellbar ist durch ein Verfahren zur Herstellung von feinstrukturierten beschichteten Oberflächen mit einem Aspektverhältnis von mindestens 0,5 zur Beeinflussung der Adhäsion umfassend die Schritte
a) Auftragen mindestens einer Beschichtungsmasse auf mindestens ein Substrat;
b) Formen einer Feinstruktur durch eine Matrize, die das Negativ einer Feinstruktur aufweist, wobei
   b1) die Matrize gegen die Beschichtungsmasse auf dem Substrat gedrückt wird oder
   b2) das Substrat aus Schritt a) die Matrize enthält;
c) Härten der so erhaltenen feinstrukturierten Beschichtungsmasse unter Erhalt einer im Wesentlichen gehärteten Beschichtung;
d) Trennen der feinstrukturierten Beschichtung von der Matrize, wobei die Schritte d) und c) auch in umgekehrter Reihenfolge durchgeführt werden können, und
   wobei
   - die Beschichtungsmasse in lösungsmittelfreiem Zustand vor dem Auftragen auf das Substrat eine Viskosität [Rotationsviskosimetrie nach DIN 53018-1 mit Platte/Kegel-Geometrie bei 25°C; Temperierung: Peltier; Messeinrichtung: HC 60/1 bei einem Schergefälle D von 10 - 1.000 1*s-1] unter 10 Pas und
   - die gehärtete Beschichtung ein E-Modul [Indentation mit Berkovich Spitze, Vorlast zwischen 0,1 und 1 mN je nach Modul der zu bestimmenden Probe; Eindrückzeit: 10 s; Haltezeit 30 s und Rückzugzeit 10 s, Kalibrierung auf Polycarbonat] von mindestens 1 und bis zu 1000 MPa aufweist,
dadurch gekennzeichnet, dass die Kontaktfläche des ersten Festkörpers und die Kontaktfläche des zweiten Festkörpers die oberflächige Feinstrukturierung aufweisen.

Vorteilhafte Weiterbildungen der Erfindung sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Die Peelkraft bzw. auch Schälkraft genannt, bezeichnet die Kraft, die benötigt wird, um zwei Objekte entlang ihrer Kontaktfläche unter einem bestimmten Winkel voneinander zu trennen. Die Peelkraft ist somit winkelabhängig. Bevorzugt wird die Peelkraft in einem 90° oder 180° Winkel zur Kontaktfläche bestimmt. Die Kräfte wirken entlang der Kante der Kontaktflächen und werden in N/cm angegeben.

Scherkräfte sind die Kräfte, die parallel zur Kontaktfläche zweier Objekte auf die gesamte Kontaktfläche wirken. Damit ist die Scherkraft geeignet die Kohäsion zwischen zwei Objekten, wie beispielsweise zwischen zwei Folien, die eine Oberflächenstrukturierung aufweisen, zu beschreiben. Die Scherkraft wird in N/mm² angegeben.

Zunächst werden im Folgenden das aus der WO 2012/004319 A1 bekannte Verfahren und dessen einzelne Verfahrensschritte näher beschrieben, durch dessen Anwendung eine Beschichtung mit einer Feinstrukturierung auf einer Oberfläche hergestellt wird. Die beschriebenen Schritte müssen nicht notwendigerweise in der angegebenen Reihenfolge durchgeführt werden, und das zu schildernde Verfahren kann auch weitere, nicht genannte Schritte aufweisen.

Das Verfahren zur Herstellung von feinstrukturierten beschichteten Oberflächen zur Beeinflussung der Adhäsion umfasst die oben genannten Schritte a), b), c) und d).

Vorteilhaft liegen die Viskositäten der Beschichtungsmassen in lösungsmittelfreiem Zustand im Bereich zwischen 10 mPas und 600 mPas, bevorzugt bis zu 500 mPas, besonders bevorzugt bis zu 400 mPas, ganz besonders bevorzugt bis zu 300 mPas und insbesondere bis zu 250 mPas und der E-Modul der gehärteten Beschichtungsmassen zwischen 2 und 20 MPa.

Solche Beschichtungsmassen ermöglichen es, dass die Matrize vollständig befüllt wird und die Struktur beim Abtrennen der Matrize erhalten bleibt. Ansonsten besteht die Gefahr, dass die Struktur kollabiert oder zerfließt.

Mit den oben angegebenen Viskositäten der lösungsmittelfreien Beschichtungsmassen und E-Moduli der gehärteten Beschichtungsmassen ist es möglich Mikrostrukturen mit den geforderten Aspektverhältnissen von mindestens 0,5, bevorzugt mindestens 0,7, besonders bevorzugt mindestens 0,9, ganz besonders bevorzugt mindestens 1, insbesondere mindestens 1,3 und speziell mindestens 1,5 zu erhalten.

Das Aspektverhältnis beschreibt das Verhältnis der Höhe eines Strukturelements zu seiner lateralen Ausdehnung. So haben beispielsweise periodisch angeordnete Rechtecke, die eine Höhe von 10 µm und eine Breite von 5 µm aufweisen, ein Aspektverhältnis von 2 (10:5). Je größer der Wert des Aspektverhältnisses ist, desto schwieriger ist im Allgemeinen die Herstellung der entsprechend strukturierten Oberfläche.

Die obere Grenze für das Aspektverhältnis liegt davon unabhängig bevorzugt bei 100, 50, 20, 15, 10 oder 5. Bei hierarchischen Strukturen gibt das Aspektverhältnis das Aspektverhältnis der größten Hierarchiestufe an.

Unter einer Beschichtungsmasse wird im Rahmen dieser Schrift eine im wesentlichen unpolymerisierte, flüssige Verbindung oder Mischung von Verbindungen mit einer näher angegeben Viskosität verstanden, die durch einen beliebigen Mechanismus polymerisiert werden kann, beispielsweise durch einen in der Beschichtungsmasse enthaltenen Starter oder durch einen äußeren Einfluss. Bei der Polymerisation kann es sich beispielsweise um eine Polykondensation oder ionische oder radikalische, bevorzugt kationische oder radikalische, besonders bevorzugt radikalische Polymerisation handeln. Unter einer Polymerisation wird dabei eine Vervielfachung des mittleren Molekulargewichts der Verbindung verstanden.

Unter einer Beschichtung wird im Rahmen dieser Schrift das aus einer Beschichtungsmasse durch Polymerisieren erhältliche Polymer verstanden, das in der Regel ein mittleres Molekulargewicht des mindestens zehnfachen, bevorzugt des mindestens zwanzigfachen, besonders bevorzugt des mindestens fünfzigfachen der eingesetzten Verbindung aufweist.

Unter der Viskosität wird im Rahmen dieser Schrift, wenn nicht anders angegeben, das Messergebnis gemäß DIN 53018-1 [Rotationsviskosimetrie mit Platte/Kegel-Geometrie bei 25°C; Temperierung: Peltier; Messeinrichtung: HC 60/1 bei einem Schergefälle D von 10 - 1.000 1*sek⁻¹] verstanden. Dabei ist darauf zu achten, dass bei der Bestimmung der Viskosität eventuell in der Beschichtungsmasse enthaltenes Lösungsmittel im Wesentlichen entfernt ist, d.h. etwaiges in der Beschichtungsmasse enthaltenes Lösungsmittel zu mindestens 90%, Gew.-%, bevorzugt zu mindestens 95%, besonders bevorzugt zu mindestens 98% und ganz besonders bevorzugt zu mindestens 99% entfernt ist. Lösungsmittel sind dabei solche leichtflüchtigen Bestandteile einer Beschichtungsmasse, die nach dem Polymerisationsmechanismus nicht in das Polymer eingebaut werden und durch Trocknen der Beschichtungsmasse bei Temperaturen von bis zu 100°C über einen Zeitraum bis zu 1 Stunde im Wesentlichen entfernt werden können.

Unter dem E-Modul wird im Rahmen dieser Schrift eine Indentation mit Berkovich-Spitze, Last zwischen 0,1 und 1 mN je nach Modul der zu bestimmenden Probe, verstanden. Das E-Modul wird dabei bestimmt an einer unstrukturierten Probe aus dem Material, das für die Strukturierung verwendet werden soll.

Es stellt eine bevorzugte Ausführungsform dar, wenn die gehärtete Beschichtung eine Glasübergangstemperatur (bestimmt gemäß ASTM Norm D3418-03 mit einer Aufheizrate von 20°C/min) mindestens von Raumtemperatur aufweist, bevorzugt mindestens 25°C, besonders bevorzugt mindestens 30°C, ganz besonders bevorzugt mindestens 35°C und insbesondere mindestens 40°C.

Die im Schritt a) aufgetragene Beschichtungsmasse kann nach einem beliebigen Härtungsmechanismus härtbar sein, beispielsweise physikalisch härtend, thermisch härtend, chemisch härtend oder strahlungshärtbar, bevorzugt ist die Beschichtungsmasse chemisch härtend oder strahlungshärtbar, besonders bevorzugt strahlungshärtbar.

Unter einer physikalischen Härtung, die am wenigsten bevorzugt ist, wird dabei das einfache Abdunsten von Lösungsmittel unter Ausbildung der Beschichtung verstanden.

Eine thermische Härtung bedeutet dabei ein Härtungsmechanismus, der auf eine Temperatur oberhalb von Raumtemperatur zurückzuführen ist. Dies kann beispielsweise die Bildung von Radikalen oder Ionen, bevorzugt Radikalen aus einem Initiator sein, der bei den erhöhten Temperaturen zerfällt und so eine radikalische bzw. ionische Polymerisation startet. Beispiele für solche thermisch aktivierbare Initiatoren sind solche, die eine Halbwertszeit bei 80°C von weniger als 100 Stunden aufweisen, wie in "Polymer Handbook", 2. Aufl., Wiley & Sons, New York beschrieben.

Unter einer chemischen Härtung wird dabei die Reaktion verschiedener Komponenten mit komplementären reaktiven Gruppen verstanden, beispielsweise im Sinne einer Polykondensation.

Bevorzugte nach diesem Mechanismus härtende Beschichtungsmassen sind ein- oder zweikomponentige Beschichtungsmassen aus Polyisocyanaten, die optional blockiert sein können, und Polyolen sowie Siloxanstrukturen.

Beispiele für letztere sind Silikon, Polydimethylsiloxan (PDMS), z.B. Sylgard®184 der Firma Dow Corning, und Polyvinylsiloxan.

Beispiele für Polyisocyanate sind in der Regel wie folgt charakterisiert:
Die mittlere NCO-Funktionalität solcher Verbindungen beträgt in der Regel mindestens 1,8 und kann bis zu 8 betragen, bevorzugt 2 bis 5 und besonders bevorzugt 2,4 bis 4.

Der Gehalt an Isocyanatgruppen nach der Oligomerisierung, berechnet als NCO=42 g/mol, beträgt, wenn nicht anders angegeben, in der Regel von 5 bis 25 Gew.-%.

Bevorzugt handelt es sich bei den Polyisocyanaten um folgende Verbindungen:
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im Allgemeinen einen NCO-Gehalt von 10 bis 30 Gew.-%, insbesondere 15 bis 25 Gew.-% und eine mittlere NCO-Funktionalität von 2,6 bis 8.
2) Uretdiongruppen aufweisende Polyisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondiisocyanat abgeleiteten. Bei Uretdiondiisocyanaten handelt es sich um cyclische Dimerisierungsprodukte von Diisocyanaten. Die Uretdiongruppen aufweisenden Polyisocyanate werden im Rahmen dieser Erfindung im Gemisch mit anderen Polyisocyanaten, insbesondere den unter 1) genannten, erhalten. Dazu können die Diisocyanate unter Reaktionsbedingungen umgesetzt werden, unter denen sowohl Uretdiongruppen als auch die anderen Polyisocyanate gebildet werden, oder zunächst die Uretdiongruppen gebildet und diese anschließend zu den anderen Polyisocyanaten umgesetzt werden oder die Diisocyanate zunächst zu den anderen Polyisocyanaten und diese anschließend zu Uretdiongruppenhaltigen Produkten umgesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris-(6-isocyanatohexyl)-biuret oder dessen Gemische mit seinen höheren Homologen. Diese Biuretgruppen aufweisenden Polyisocyanate weisen im Allgemeinen einen NCO-Gehalt von 18 bis 22 Gew.-% und eine mittlere NCO-Funktionalität von 2,8 bis 6 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Diisocyanat, beispielsweise Hexamethylendiisocyanat oder Isophorondiisocyanat, mit ein- oder mehrwertigen Alkoholen. Diese Urethan- und/oder Allophanatgruppen aufweisenden Polyisocyanate haben im Allgemeinen einen NCO-Gehalt von 12 bis 24 Gew.-% und eine mittlere NCO-Funktionalität von 2,5 bis 4,5. Solche Urethan- und/oder Allophanatgruppen aufweisenden Polyisocyanate können unkatalysiert oder bevorzugt in Gegenwart von Katalysatoren, wie beispielsweise Ammoniumcarboxylaten oder -hydroxiden, oder Allophanatisierungskatalysatoren, z.B. Zn-(II)-Verbindungen jeweils in Anwesenheit von ein-, zwei- oder mehrwertigen, bevorzugt einwertigen Alkoholen, hergestellt werden.
5) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid zugänglich.
6) Iminooxadiazindiongruppen enthaltende Polyisocyanate, vorzugsweise von Hexamethylendiisocyanat oder Isophorondiisocyanat abgeleitet. Solche Iminooxadiazindiongruppen enthaltenden Polyisocyanate sind aus Diisocyanaten mittels spezieller Katalysatoren herstellbar.
7) Uretonimin-modifizierte Polyisocyanate.
8) Carbodiimid-modifizierte Polyisocyanate.
9) Hyperverzweigte Polyisocyanate, wie sie beispielsweise bekannt sind aus der DE 100 13 186 A1 oder DE 100 13 187 A1.
10) Polyurethan-Polyisocyanat-Präpolymere, aus Di- und/oder Polyisocyanaten mit Alkoholen.
11) Polyharnstoff-Polyisocyanat-Präpolymere.
12) Die Polyisocyanate 1)-11), bevorzugt 1), 3), 4) und 6) können nach deren Herstellung in Biuretgruppen- oder Urethan-/Allophanatgruppen aufweisende Polyisocyanate mit aromatisch, cycloaliphatisch oder aliphatisch gebundenen, bevorzugt (cyclo)aliphatisch gebundenen Isocyanatgruppen, überführt werden. Die Bildung von Biuretgruppen erfolgt beispielsweise durch Zugabe von Wasser oder Umsetzung mit Aminen. Die Bildung von Urethan- und/oder Allophanatgruppen erfolgt durch Umsetzung mit ein-, zwei- oder mehrwertigen, bevorzugt einwertigen Alkoholen, gegebenenfalls in Gegenwart von geeigneten Katalysatoren. Diese Biuret- oder Urethan-/Allophanatgruppen aufweisenden Polyisocyanate weisen im Allgemeinen einen NCO-Gehalt von 18 bis 22 Gew.-% und eine mittlere NCO-Funktionalität von 2,8 bis 6 auf.
13) Hydrophil-modifizierte Polyisocyanate, d.h. Polyisocyanate, die neben den unter 1-12 beschriebenen Gruppen solche enthalten, die formal durch Addition von Molekülen mit NCO-reaktiven Gruppen und hydrophilierenden Gruppen an die Isocyanatgruppen obiger Moleküle entstehen. Bei letzteren handelt es sich um nicht-ionische Gruppen wie Alkyl-Polyethylenoxid und/oder ionische, welche von Phosphorsäure, Phosphonsäure, Schwefelsäure oder Sulfonsäure, bzw. ihren Salzen abgeleitet sind.
14) Modifizierte Polyisocyanate für Dual-Cure-Anwendungen, d.h. Polyisocyanate, die neben den unter 1-12 beschriebenen Gruppen solche enthalten, die formal durch Addition von Molekülen mit NCO-reaktiven Gruppen und durch UV- oder aktinische Strahlung vernetzbare Gruppen an die Isocyanatgruppen obiger Moleküle entstehen. Bei diesen Molekülen handelt es sich beispielsweise um Hydroxyalkyl(meth)acrylate und andere Hydroxy-Vinylverbindungen.

Die oben aufgeführten Diisocyanate oder Polyisocyanate können auch zumindest teilweise in blockierter Form vorliegen.

Zur Blockierung eingesetzte Verbindungsklassen sind beschrieben in D.A. Wieks, Z.W. Wieks, Progress in Organic Coatings, 36, 148-172 (1999), 41, 1-83 (2001) sowie 43, 131-140 (2001).

Beispiele für zur Blockierung eingesetzte Verbindungsklassen sind Phenole, Imidazole, Triazole, Pyrazole, Oxime, N-Hydroxyimide, Hydroxybenzoesäureester, sekundäre Amine, Lactame, CH-acide cyclische Ketone, Malonsäureester oder Alkylacetoacetate.

In einer bevorzugten Ausführungsform des Verfahrens ist das Polyisocyanat ausgewählt aus der Gruppe bestehend aus Isocyanuraten, Biureten, Urethanen und Allophanaten, bevorzugt aus der Gruppe bestehend aus Isocyanuraten, Urethanen und Allophanaten, besonders bevorzugt aus der Gruppe bestehend aus Isocyanuraten und Allophanaten, insbesondere handelt es sich um ein isocyanuratgruppenhaltiges Polyisocyanat.

Bei den Polyolen kann es sich beispielsweise um Polyacrylatpolyole, Polyesterpolyole, Polyetherpolyole, Polyurethanpolyole; Polyharnstoffpolyole; Polyesterpolyacrylatpolyole; Polyesterpolyurethanpolyole; Polyurethanpolyacrylatpolyole, polyurethan-modifizierte Alkydharze; Fettsäure-modifizierte Polyesterpolyurethanpolyole, Kopolymerisate mit Allylethern, Pfropfpolymerisate aus den genannten Stoffgruppen mit z.B. unterschiedlichen Glasübergangstemperaturen, sowie Mischungen der genannten Polyole handeln. Bevorzugt sind Polyacrylatpolyole, Polyesterpolyole und Polyetherpolyole.

Bevorzugte OH-Zahlen, gemessen gemäß DIN 53240-2, sind 40-350 mg KOH/g Festharz für Polyester, bevorzugt 80-180 mg KOH/g Festharz, und 15-250 mg KOH/g Festharz für Polyacrylatole, bevorzugt 80-160 mg KOH/g.

Zusätzlich können die Polyole eine Säurezahl gemäß DIN EN ISO 3682 bis 200 mg KOH/g, bevorzugt bis 150 und besonders bevorzugt bis 100 mg KOH/g aufweisen.

Polyacrylatpolyole weisen bevorzugt ein Molekulargewicht Mₙ von mindestens 1.000, besonders bevorzugt mindestens 2.000 und ganz besonders bevorzugt mindestens 5.000 g/mol auf. Das Molekulargewicht Mₙ kann prinzipiell nach oben unbegrenzt sein, bevorzugt bis 200.000, besonders bevorzugt bis zu 100.000, ganz besonders bevorzugt bis zu 80.000 und insbesondere bis zu 50.000 g/mol betragen. Das zahlenmittlere Molekulargewicht Mₙ wird bestimmt durch Gelpermeationschromatographie mit Polystyrol als Standard, Lösemittel Tetrahydrofuran.

Die Hydroxyzahl wird im Wesentlichen durch Einpolymerisierung von hydroxygruppentragenden Monomeren bewirkt.

Dies können beispielsweise Monoester von α,ß-ungesättigten Carbonsäuren, wie Acrylsäure, Methacrylsäure (in dieser Schrift kurz als "(Meth)acrylsäure" bezeichnet) sein, mit Di- oder Polyolen, die vorzugsweise 2 bis 20 C-Atome und wenigstens zwei Hydroxygruppen aufweisen, wie Ethylenglykol, Diethylenglykol, Triethylenglykol, 1,2-Propylenglykol, 1,3-Propylenglykol, 1,1-Dimethyl-1,2-ethandiol, Dipropylenglykol, Triethylenglykol, Tetraethylenglykol, Pentaethylenglykol, Tripropylenglykol, 1,4-Butandiol, 1,5-Pentandiol, Neopentylglykol, Hydroxypivalinsäureneopentylglykolester, 2-Ethyl-1,3-propandiol, 2-Methyl-1,3-propandiol, 2-Butyl-2-ethyl-1,3-propandiol, 1,6-Hexandiol, 2-Methyl-1,5-pentandiol, 2-Ethyl-1,4-butandiol, 2-Ethyl-1,3-hexandiol, 2,4-Diethyl-oktan-1,3-diol, 2,2-Bis(4-hydroxycyclohexyl)-propan, 1,1-, 1,2-, 1,3- und 1,4-Bis(hydroxymethyl)-cyclohexan, 1,2-, 1,3- oder 1,4-Cyclohexandiol, Glycerin, Trimethylolethan, Trimethylolpropan, Trimethylolbutan, Pentaerythrit, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit, Isomalt, Poly-THF mit einem Molgewicht zwischen 162 und 4.500, bevorzugt 250 bis 2.000, Poly-1,3-propandiol oder Polypropylenglykol mit einem Molgewicht zwischen 134 und 2.000 oder Polyethylenglykol mit einem Molgewicht zwischen 238 und 2.000.

Bevorzugt sind 2-Hydroxyethylacrylat, 2-Hydroxyethylmethacrylat, 2- oder 3-Hydroxypropylacrylat, 1,4-Butandiolmonoacrylat oder 3-(Acryloyloxy)-2-hydroxypropylacrylat und besonders bevorzugt 2-Hydroxyethylacrylat und/oder 2-Hydroxyethylmethacrylat.

Die hydroxygruppentragenden Monomere werden in die Copolymerisation im Gemisch mit anderen polymerisierbaren, bevorzugt radikalisch polymerisierbaren Monomeren, eingesetzt, bevorzugt solche, welche zu mehr als 50 Gew.-% aus C₁-C₂₀-, bevorzugt C₁- bis C₄-Alkyl(meth)acrylat, (Meth)acrylsäure, Vinyl-aromaten mit bis zu 20 C-Atomen, Vinylestern von bis zu 20 C-Atomen enthaltenden Carbonsäuren, Vinylhalogeniden, nicht aromatischen Kohlenwasserstoffen mit 4 bis 8 C-Atomen und 1 oder 2 Doppelbindungen, ungesättigten Nitrilen und deren Mischungen bestehen. Besonders bevorzugt sind die Polymere, die zu mehr als 60 Gew.-% aus C₁-C₁₀-Alkyl(meth)acrylaten, Styrol und dessen Derivate, Vinylimidazol oder deren Mischungen bestehen.

Darüber hinaus können die Polymere gegebenenfalls weitere Monomere enthalten, z.B. (Meth)acrylsäureglycidylepoxyester, ethylenisch ungesättigte Säuren, insbesondere Carbonsäuren, Säureanhydride oder Säureamide.

Weitere Polyole sind z.B. Polyesterole, wie sie durch Kondensation von Polycarbonsäuren, insbesondere Dicarbonsäuren mit Polyolen, insbesondere Diolen erhältlich sind. Um eine für die Polymerisation angemessene Funktionalität des Polyesterpolyols zu gewährleisten werden partiell auch Triole, Tetrole etc. wie auch Trisäuren etc. eingesetzt.

Polyesterpolyole sind z.B. aus Ullmanns Encyklopädie der technischen Chemie, 4. Auflage, Band 19, S. 62 bis 65 bekannt. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, aromatisch oder heterocyclisch sein und gegebenenfalls, z.B. durch Halogenatome, substituiert und/oder ungesättigt sein. Als Beispiele hierfür seien genannt:
Oxalsäure, Maleinsäure, Fumarsäure, Bernsteinsäure, Glutarsäure, Adipinsäure, Sebacinsäure, Dodekandisäure, o-Phthalsäure, Isophthalsäure, Terephthalsäure, Trimellithsäure, Azelainsäure, 1,4-Cyclohexandicarbonsäure oder Tetrahydrophthalsäure, Korksäure, Azelainsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäureanhydrid, dimere Fettsäuren, deren Isomere und Hydrierungsprodukte sowie veresterbare Derivate, wie Anhydride oder Dialkylester, beispielsweise C₁-C₄-Alkylester, bevorzugt Methyl-, Ethyl- oder n-Butylester, der genannten Säuren eingesetzt werden. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, besonders bevorzugt Bernsteinsäure, Adipinsäure, Sebacinsäure und Dodecandicarbonsäure. Als mehrwertige Alkohole kommen zur Herstellung der Polyesterole in Betracht 1,2-Propandiol, Ethylenglykol, 2,2-Dimethyl-1, 2-Ethandiol, 1,3-Propandiol, 1,2-Butandiol, 1,3-Butandiol, 1,4-Butandiol, 3-Methylpentan-1,5-diol, 2-Ethylhexan-1,3-diol, 2,4-Diethyloctan-1,3-diol, 1,6-Hexandiol, Poly-THF mit einer Molmasse zwischen 162 und 4.500, bevorzugt 250 bis 2.000, Poly-1,3-propandiol mit einer Molmasse zwischen 134 und 1.178, Poly-1,2-propandiol mit einer Molmasse zwischen 134 und 898, Polyethylenglykol mit einer Molmasse zwischen 106 und 458, Neopentylglykol, Hydroxypivalinsäureneopentylglykolester, 2-Ethyl-1,3-propandiol, 2-Methyl-1,3-propandiol, 2,2-Bis(4-hydroxycyclohexyl)-propan, 1,1-, 1,2-, 1,3- und 1,4-Cyclohexandimethanol, 1,2-, 1,3- oder 1,4-Cyclohexandiol, Trimethylolbutan, Trimethylolpropan, Trimethylolethan, Neopentylglykol, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt, die gegebenenfalls wie oben beschrieben alkoxyliert sein können.

Bevorzugt sind Alkohole der allgemeinen Formel HO-(CH₂)ₓ-OH, wobei x eine Zahl von 1 bis 20, bevorzugt eine gerade Zahl von 2 bis 20 ist. Bevorzugt sind Ethylenglycol, Butan-1,4-diol, Hexan-1,6-diol, Octan-1,8-diol und Dodecan-1,12-diol. Weiterhin bevorzugt ist Neopentylglykol.

Ferner kommen auch Polycarbonatdiole in Betracht, wie sie z.B. durch Umsetzung von Phosgen mit einem Überschuss von den als Aufbaukomponenten für die Polyesterpolyole genannten niedermolekularen Alkohole erhalten werden können.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, ß-Propiolacton, γ-Butyrolacton und/oder Methyl-ε-caprolacton, 4-Hydroxybenzoe-säure, 6-Hydroxy-2-naphthalinsäure oder Pivalolacton sowie deren Gemische. Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Weiterhin sind als Polymere auch Polyetherole geeignet, die durch Addition von Ethylenoxid, Propylenoxid oder Butylenoxid an H-aktive Komponenten hergestellt werden. Ebenso sind Polykondensate aus Butandiol geeignet.

Weiterhin können hydroxyfunktionelle Carbonsäuren eingesetzt werden, wie beispielsweise Dimethylolpropionsäure oder Dimethylolbutansäure.

Bei den Polymeren kann es sich natürlich auch um Verbindungen mit primären der sekundären Aminogruppen handeln.

Dabei kann es sich beispielsweise um zumindest teilweise hydrolysierte Poly-N-vinylformamid oder Polyalkylenimine, besonders Polyethylenimine handeln.

Die Herstellung der Polymerisate von N-Vinylformamid ist seit langem bekannt (siehe zum Beispiel EP 71 050 B1, entspricht US 4, 421, 602).

Neben den nichtionischen (Co)Polymerisaten erhält man kationische Copolymerisate von N-Vinylformamid besonders einfach dadurch, dass man Homopolymerisate von N-Vinylformamid mit definierten Mengen von Säure oder Base hydrolytisch zu dem gewünschten Hydrolysegrad spaltet, wie in der EP 71 050 A1 beschrieben. Die dabei an der Polymerkette entstehenden Aminogruppen sind je nach pH-Wert der Lösung mehr oder weniger protoniert und verleihen damit dem Polymeren einen kationischen Charakter.

Unter nichtionischen (Co)Polymerisaten werden dabei erfindungsgemäß solche N-Vinylformamid in einpolymerisierter Form enthaltende (Co)Polymerisate verstanden, die unabhängig vom pH-Wert keine Ladungen enthalten. Dies können beispielsweise ungespaltenes Poly-N-Vinylformamid oder Copolymere aus N-Vinylformamid und neutralen Monomeren sein.

Auch kationische Copolymerisate, die N-Vinylformamid einpolymerisiert enthalten, können erfindungsgemäß verwendet werden.

Die Herstellung kationischer Copolymerisate aus N-Vinylformamid und einem wasserlöslichen basischen Monomer, wie beispielsweise N-Trialkylammoniumalkylacrylamide, zumindest teilweise protonierte N-Dialkylammoniumalkylacrylamide, N-Trialkylammoniumalkylmethacrylamide, zumindest teilweise protonierte N-Dialkylammoniumalkylmethacrylamide, N-Trialkylammoniumalkylacrylester, zumindest teilweise protonierte N-Dialkylammoniumalkylacrylester, N-Trialkylammoniumalkylmethacrylester, zumindest teilweise protonierte N-Dialkylammoniumalkylmethacrylester und/oder Diallyldialkylammoniumsalze, sowie deren Verwendung als Flockungs- und Entwässerungshilfsmittel für die Behandlung von Abwässern und Schlämmen ist in der EPO 464 043 B1 (entspricht 5,225,088) beschrieben.

Beispielsweise kann man als wasserlösliche kationische Monomere Diallyldimethylammoniumchlorid, Diallyldiethylammoniumchlorid, Diallyldimethylammoniummethosulfat, Diallyldiethylammoniumethosulfat, N-(2-Trimethylammonium)ethylacrylamidmethosulfat oder N-2-(Ethyl-dimethyl)ammoniumethylmethacrylamidethosulfat oder Gemische davon mit N-Vinylformamid copolymerisieren, wie in EP 0 464 043 B1 beschrieben, und erhält damit kationische Copolymerisate, die sich für die Verwendung in den erfindungsgemäßen Streichfarben eignen.

Das (Co)Polymerisat enthält im Allgemeinen folgende Monomere einpolymerisierter Form:
N-Vinylformamid:
   50-100 Gew.-%, bevorzugt 80-99,5 Gew.-%, besonders bevorzugt 90-99 Gew.-% und ganz besonders bevorzugt 95-99 Gew.-%.
Wasserlösliche(s) kationische(s) Monomer(e):
   0-20 Gew.-%, bevorzugt 0,5-10 Gew.-%, besonders bevorzugt 1-5 Gew.-% und ganz besonders bevorzugt 1-5 Gew.-%.
Andere(s) Monomer(e):
   0-30 Gew.-%, bevorzugt 0-10 Gew.-%, besonders bevorzugt 0-5 Gew.-% und ganz besonders bevorzugt 0 Gew.-%.

Als andere Monomere können dem Fachmann an sich bekannte, ethylenisch ungesättigte Monomere copolymerisiert werden. Beispielsweise sind geeignet Ester der (Meth)acrylsäure mit Alkoholen, die 1 bis 20 C-Atome aufweisen, z.B. (Meth)-acrylsäuremethylester, (Meth)acrylsäureethylester, (Meth)acrylsäure-n-butylester, (Meth)acrylsäure-2-ethylhexylester, vinylaromatische Verbindungen, z.B. Styrol, Divinylbenzol, α,ß-ungesättigte Nitrile, z.B. Acrylnitril, Methacrylnitril, Vinylester, z.B. Vinylacetat, Vinylpropionat, halogenierte ethylenisch ungesättigte Verbindungen, z.B. Vinyl-chlorid, Vinylidenchlorid, konjugierte ungesättigte Verbindungen, z.B. Butadien, Isopren, Chloropren, einfach ungesättigte Verbindungen, z.B. Ethylen, Propylen, 1-Buten, 2-Buten, iso-Buten, cyclische einfach ungesättigte Verbindungen, z.B. Cyclopenten, Cyclohexen, Cyclododecen, Allylessigsäure, Vinyl-essigsäure, monoethylenisch ungesättigten Carbonsäuren mit 3 bis 8 C-Atomen sowie deren wasserlöslichen Alkalimetall-, Erdalkalimetall- oder Ammoniumsalze wie beispielsweise: Acryl-säure, Methacrylsäure, Dimethylacrylsäure, Ethacrylsäure, Maleinsäure, Citraconsäure, Methylenmalonsäure, Crotonsäure, Fumarsäure, Mesaconsäure und Itaconsäure, Maleinsäure, N-Vinylpyrrolidon, N-Vinyllactame, wie z.B. N-Vinylcaprolactam, N-Vinyl-N-Alkyl-Carbonsäureamide oder N-Vinyl-carbonsäureamide, wie z.B. N-Vinylacetamid, N-Vinyl-N-methylformamid und N-Vinyl-N-methylacetamid, Vinylether, z.B. Methylvinylether, Ethylvinylether, n-Propylvinylether, iso-Propylvinylether, n-Butylvinylether, sek-Butylvinylether, iso-Butylvinylether, tert-Butylvinylether, 4-Hydroxybutylvinylether, sowie Gemische davon.

Das Einpolymerisieren der anderen Monomere ist jedoch zum Erreichen des erfinderischen Erfolgs nicht zwingend erforderlich, sodass darauf auch verzichtet werden kann.

Eine häufige, aber nicht die einzige Methode zur Herstellung der bisher angeführten (Co)Polymerisate ist die radikalische (Co)Polymerisation in einem Lösungs- oder Verdünnungsmittel. Die radikalische (Co)Polymerisation solcher Monomere erfolgt beispielsweise in wässriger Lösung in Gegenwart von Polymerisationsinitiatoren, die unter Polymerisationsbedingungen in Radikale zerfallen. Die (Co)Polymerisation kann in einem weiten Temperaturbereich, gegebenenfalls unter vermindertem oder auch unter erhöhtem Druck in der Regel bei Temperaturen bis zu 100°C vorgenommen werden. Der pH-Wert des Reaktionsgemisches wird gewöhnlich in dem Bereich von 4 bis 10 eingestellt.

Die (Co)Polymerisation kann aber auch in anderer, dem Fachmann an sich bekannter Weise durchgeführt werden, z.B. als Lösungs-, Fällungs-, Wasser-in-Öl-Emulsions- oder umgekehrte Suspensionspolymerisation. Bevorzugt ist die Lösungspolymerisation.

Dabei wird das N-Vinylformamid unter Verwendung radikalischer Polymerisationsinitiatoren, z.B. in Radikale zerfallende Azoverbindungen, wie 2,2'-Azo-bis (isobutyronitril),2,2'-Azobis-(2-amidinopropan)-hydrochlorid oder 4,4'-Azo-bis-(4'-cyan-pentansäure) (co)polymerisiert.

Die genannten Verbindungen werden meist in Form wässriger Lösungen eingesetzt, wobei die untere Konzentration durch die in der (Co)Polymerisation vertretbare Wassermenge und die obere Konzentration durch die Löslichkeit der betreffenden Verbindung in Wasser bestimmt ist. Im Allgemeinen beträgt die Konzentration 0,1 bis 30 Gew.-%, bevorzugt 0,5 bis 20 Gew.-%, besonders bevorzugt 1,0 bis 10 Gew.-%, bezogen auf die Lösung.

Die Menge der Initiatoren beträgt im Allgemeinen 0,1 bis 10 Gew.-%, bevorzugt 0,5 bis 5 Gew.-%, bezogen auf die zu (co)polymerisierenden Monomeren. Es können auch mehrere, verschiedene Initiatoren bei der (Co)Polymerisation Verwendung finden.

Als Lösungs- oder Verdünnungsmittel können z.B. Wasser, Alkohole, wie Methanol, Ethanol, n- oder iso-Propanol, n- oder iso-Butanol, oder Ketone, wie Aceton, Ethylmethylketon, Diethylketon oder iso-Butylmethylketon dienen.

Gegebenenfalls kann die (Co)Polymerisation in Gegenwart von Polymerisationsreglern, wie beispielsweise Hydroxylammoniumsalze, chlorierte Kohlenwasserstoffe und Thioverbindungen, wie z.B. tert.-Butylmercaptan, Thioglycolsäureethylacrylester, Mercaptoethynol, Mercaptopropyltrimethoxysilan, Dodecylmercaptan, tert.-Dodecylmercaptan oder Alkalimetallhypophosphite, durchgeführt werden. Bei der (Co)Polymerisation können diese Regler, z.B. in Mengen von 0 bis 0,8 Gew.-Teile, bezogen auf 100 Gew.-Teile der zu (co)polymerisierenden Monomeren, eingesetzt werden, durch die die Molmasse des entstehenden (Co)Polymers verringert wird.

Bei der Emulsionspolymerisation können ionische und/oder nicht-ionische Emulgatoren und/oder Schutzkolloide bzw. Stabilisatoren als grenzflächenaktive Verbindungen verwendet werden.

Je nach Polymerisationsbedingungen erhält man bei der (Co)Polymerisation (Co)Polymerisate eines unterschiedlichen Molekulargewichtes, das in der EP 71 050 B1 und im Folgenden mit Hilfe der K-Werte nach Fikentscher (gemessen in 0,5 Gew.-%iger wässriger Kochsalzlösung bei 25°C) charakterisiert wird.

(Co)Polymerisate mit einem hohen K-Wert, z.B. oberhalb von 80, werden vorzugsweise durch (Co)Polymerisieren des N-Vinylformamids in Wasser hergestellt. (Co)Polymerisate mit einem hohen K-Wert mit hohen Molekulargewichten erhält man darüber hinaus beispielsweise durch (Co)Polymerisieren der Monomeren in Form der umgekehrten Suspensionspolymerisation oder durch (Co)Polymerisieren der Monomeren nach dem Verfahren der Wasser-in-Öl-Polymerisation.

Bei dem Verfahren der umgekehrten Suspensionspolymerisation sowie der Wasser-in-Öl-Polymerisation verwendet man als Ölphase gesättigte Kohlenwasserstoffe, beispielsweise Hexan, Heptan, Cyclohexan, Dekalin oder aromatische Kohlenwasserstoffe, wie Benzol, Toluol, Xylol und Cumol. Das Verhältnis von Ölphase zu wässriger Phase beträgt bei der umgekehrten Suspensionspolymerisation beispielsweise 10:1 bis 1:10.

(Co)Polymerisat mit einem niedrigen K-Wert, z.B. unterhalb von 80, erhält man, wenn man die (Co)Polymerisation in Gegenwart von Polymerisationsreglern oder in einem Lösungsmittel durchführt, das die (Co)Polymerisation regelt, z.B. Alkohole, wie Methanol, Ethanol, n- oder iso-Propanol, oder Ketone, wie Aceton, Ethylmethylketon, Diethylketon oder iso-Butylmethylketon. K-Werte mit niedrigen Molekulargewichten und entsprechend niedrigen K-Werten erhält man weiterhin mit Hilfe der üblichen Methoden, d.h. Einsatz größerer Mengen an Polymerisationsinitiator oder Verwendung von Polymerisationsreglern oder Kombinationen der genannten Maßnahmen.

Das Molekulargewicht der erfindungsgemäß einsetzbaren (Co)Polymerisate ist nicht beschränkt, doch sollte es nicht zu hoch sein, damit die Streichmasse keine zu hohe Viskosität bekommt. Bevorzugt werden (Co)Polymerisate mit K-Werten von 10 bis 100, wobei K-Werte von 30 bis 80 besonders bevorzugt sind. Die K-Werte werden nach Fikentscher gemessen in 0,5 Gew.-%iger wässriger Kochsalzlösung bei 25°C.

Vinylformamid enthaltende (Co)Polymerisate können erfindungsgemäß in ungespaltener und in zumindest teilweise gespaltener Form eingesetzt werden. Bevorzugt ist ein Spaltgrad von 10 bis 100%, besonders bevorzugt von 20 bis 98 % und ganz besonders bevorzugt von 30 bis 95 %. Die Art der Abspaltung der Formylgruppe ist dabei nicht beschränkt, sie kann beispielsweise in Gegenwart von Säure oder Base erfolgen, bevorzugt ist die Spaltung in Gegenwart von Basen, wie beispielsweise Natriumhydroxid, Kaliumhydroxid, Erdalkalimetallhydroxide, Ammoniak oder Amine.

Pro Formylgruppenäquivalent im (Co)Polymer von N-Vinylformamid benötigt man für die saure Hydrolyse etwa 0,05 bis 1,5 Äquivalente einer Säure, wie Salzsäure, Bromwasserstoffsäure, Phosphorsäure, Schwefelsäure. Der pH-Wert bei der sauren Hydrolyse liegt in dem Bereich von 2 bis 0, vorzugsweise bei 1 bis 0. Die Hydrolyse verläuft wesentlich schneller als die von (Co)Polymerisaten anderer N-Vinylcarbonsäureamide, wie z.B. des N-Methyl-N-Vinylformamids, und kann daher unter schonenderen Bedingungen, d.h. bei niedrigeren Temperaturen und ohne einen hohen Überschuss von Säuren, durchgeführt werden.

Darüber hinaus lässt sich die Hydrolyse der Formylgruppen des Poly-N-vinylformamids auch in alkalischem Medium durchführen, z.B. in dem pH-Bereich von 11 bis 14. Dieser pH-Wert wird vorzugsweise durch Zugabe von Natronlauge oder Kalilauge eingestellt. Es ist jedoch auch möglich Ammoniak, Amine und/oder Erdalkalimetallbasen zu verwenden. Für die alkalische Hydrolyse verwendet man 0,05 bis 1,5, vorzugsweise 0,4 bis 1,0 Äquivalente einer Base.

Die Abspaltung der Formylgruppe kann beispielsweise in Wasser durchgeführt werden.

Die Abspaltung der Formylgruppe erfolgt bei Temperaturen in dem Bereich von 20 bis 200 °C, vorzugsweise 40 bis 180 °C und besonders bevorzugt in dem Temperaturbereich von 70 bis 90 °C.

Die Spaltung kann auch ohne Säure oder Base bei hohen Temperaturen, beispielsweise über 100°C, bevorzugt 120 bis 180 °C, besonders bevorzugt 140 bis 160 °C in Gegenwart eines Lösungsmittels, z.B. Wasser, durchgeführt werden. Bevorzugt wird dies bei Bedingungen oberhalb des kritischen Punktes durchgeführt, beispielsweise mit überkritischem Wasser.

Bei der Hydrolyse, d.h. die Formylgruppe wird in Wasser in Gegenwart von Säuren oder Basen, aus dem Poly-N-vinylformamid abgespalten, erhält man als Nebenprodukt Ameisensäure beziehungsweise Salze der Ameisensäure.

Polyalkylenimine, besonders Polyethylenimine, sind vielfältig kommerziell verfügbar und sind erhältlich durch Polymerisation der korrespondierenden monomeren Alkylenimine in Gegenwart von Säuren, Lewis-Säuren oder Halogenalkanen. Bei den Polyethyleniminen kann es sich um Homopolymere, Copolymere oder Pfropfpolymere handeln, wie sie beispielsweise beschrieben sind in US 2,182,306 oder US 3,203,910.

Optional können diese Polymere nachträglich vernetzt werden. Nützliche Vernetzer sind beispielsweise solche multifunktionellen Verbindungen, die reaktive Gruppen gegenüber primären Aminogruppen aufweisen, beispielsweise multifunktionelle Epoxide, wie Diglycidylether von Oligo- oder Polyethylenoxiden oder anderen multifunktionellen Alkoholen, wie beispielsweise Glycerin oder Zucker, multifunktionell Carbonsäureester, Polyisocyanate, multifunktionelle Acrylsäure- oder Methacrylsäureester, multifunktionelle Acrylamide oder Methacrylamide, Epichlorhydrin, multifunktionelle Säurehalogenide, multifunktionelle Alkohole, wie beispielsweise Glycerin oder Zucker, Divinylsulfone, Maleinsäureanhydrid, ω-Hylogencarbonylchloride oder multifunktionelle Halogenalkane, besonders α,ω-Dichloralkane.

Polymere mit Ethylenimineinheiten sind ebenfalls bekannt aus EP 0 411 400 A1, DE 24 34 816 A1 und US 4,066,494.

Beispiele von Polymeren mit Ethylenimineinheiten sind beispielsweise
- Homopolymere von Ethylenimin,
- Polyethyleneimine, die mit mindestens difunktionellen Vernetzern vernetzt sind,
- Polyamidoamine, die mit Ethyleniminen gepfropft sind und mit mindestens difunktionellen Vernetzern vernetzt sind,
- Reaktionsprodukte von Polyethyleniminen mit Monocarbonsäuren, die amidierte Polyethylenimine ergeben,
- Michael Additionsprodukte von Polyethyleniminen auf ethylenisch ungesättigte Säuren, Salze, Ester, Amide oder Nitrile von monoethylenisch ungesättigte Säuren,
- Phosphonomethylierte Polyethyleneimine,
- Carboxylierte Polyethylenimine und
- Alkoxylierte Polyethylenimine.

Polymere, die erhältlich sind durch Kondensation mindestens einer Polycarbonsäure mit mindestens einem Polyamin und anschließend durch Pfropfung mit Ethylenimin und anschließender Vernetzung mit einer der oben bezeichneten Komponenten können ebenfalls eingesetzt werden. Ein Verfahren zur Herstellung solcher Verbindungen ist beispielsweise beschrieben in DE 24 34 816 A1, worin α,ω-Chlorohydrinether von Oligo- oder Polyethyleneoxiden als Vernetzer eingesetzt werden.

Reaktionsprodukte von Polyethyleniminen mit Monocarbonsäuren unter Erhalt von amidierten Polyethyleniminen sind bekannt aus WO 94/12560 A1. Michael Additionsprodukte von Polyethyleneiminen mit ethylenisch ungesättigten Säuren, Salzen, Estern, Amiden oder Nitrilen von monoethylenisch ungesättigten Säuren sind bekannt aus WO 94/14873 A1. Phosphonomethyliert Polyethyleneimines sind im Detail beschrieben in WO 97/25367 A1. Carboxylierte Polyethylenimine sind erhältlich, beispielsweise, in einer Strecker Synthese durch Reaktion von Polyethyleneiminen mit Formaldehyd und Ammoniak/Blausäure und Hydrolyse des Reaktionsproduktes. Alkoxylierte Polyethylenimine sind herstellbar durch Reaktion von Polyethyleniminen mit Alkylenoxiden wie Ethylenoxid und/oder Propylenoxid.

Des Weiteren sind aminogruppenhaltige Polymere denkbar, wie sie beschrieben in WO 97/25367 A1 sind, dort besonders von Seite 6, Zeile 9 bis Seite 18, Zeile 44, auf die hiermit ausdrücklich Bezug genommen wird, sowie in WO 94/12560 A1, dort besonders Seite 3, Zeile 23 bis Seite 6, Zeile 27, auf die hiermit ausdrücklich Bezug genommen wird.

Zur Herstellung solcher Zweikomponenten Beschichtungsmassen zur Ausbildung feinstrukturierter Oberflächen werden Polyisocyanat und Polyol bzw. Polyamin in einem Molverhältnis von Isocyanatgruppen zu gegenüber Isocyanat reaktiven Gruppen von 0,1:1 bis 10:1, bevorzugt 0,2:1 bis 5:1, besonders bevorzugt 0,3:1 bis 3:1, ganz besonders bevorzugt 0,5:1 bis 2:1, insbesondere 0,8:1 bis 1,2:1 und speziell 0,9:1 bis 1,1:1 miteinander vermischt, wobei gegebenenfalls noch weitere Additive eingemischt werden können, und auf das Substrat aufgetragen.

Anschließend wird Umgebungstemperatur bis 140°C, bevorzugt 20 bis 80 °C, besonders bevorzugt bis 60°C die Beschichtungsmasse ausgehärtet.

Dies erfordert je nach Temperatur in der Regel nicht mehr 12 Stunden, bevorzugt bis zu 8 Stunden, besonders bevorzugt bis zu 6, ganz besonders bevorzugt bis zu 4 und insbesondere bis zu 3 Stunden.

In einer besonders bevorzugten Ausführungsform handelt es sich bei dem Polyisocyanat um Isocyanuratgruppen enthaltende Polyisocyanate von 1,6-Hexamethylendiisocyanat.

In einer weiteren besonders bevorzugten Ausführungsform handelt es sich bei dem Polyisocyanat um ein Gemisch von Isocyanuratgruppen enthaltenden Polyisocyanaten von 1,6-Hexamethylendiisocyanat und von Isophorondiisocyanat.

In einer besonders bevorzugten Ausführungsform handelt es sich bei dem Polyisocyanat um ein Gemisch enthaltend niedrigviskose Polysiocyanate, bevorzugt Isocyanuratgruppen enthaltende Polyisocyanate, mit einer Viskosität von 600-1.500 mPa*s, insbesondere unter 1.200 mPa*s, niederviskose Urethane und/oder Allophanate mit einer Viskosität von 200-1.600 mPa*s, insbesondere 600-1.500 mPa*s, und/oder Iminooxadiazindiongruppen enthaltende Polyisocyanate.

Vorzugsweise handelt es sich bei den Beschichtungsmassen um strahlungshärtbare Beschichtungsmassen, die durch Strahlung gehärtet werden.

Strahlungshärtung heißt hier, dass die radikalische Polymerisation von polymerisierbaren Verbindungen infolge einer elektromagnetischen und/oder korpuskularen Strahlung initiiert wird, beispielsweise (N)IR-Licht im Wellenlängenbereich von λ=700-1.200 nm, bevorzugt 700-900 nm und/oder UV-Licht im Wellenlängenbereich von λ=200 bis 700 nm, bevorzugt von λ=200 bis 500 nm und besonders bevorzugt λ=250 bis 400 nm und/oder Elektronenstrahlung im Bereich von 150 bis 300 keV und besonders bevorzugt mit einer Strahlungsdosis von mindestens 80, bevorzugt 80 bis 3.000 mJ/cm².

Bei Härtung mit Hilfe von (N)IR- und/oder UV-Licht ist dabei darauf zu achten, dass in diesem Fall in den Beschichtungsmassen Photoinitiatoren anwesend sind, die durch Licht der eingestrahlten Wellenlänge zu Radikalen zersetzt werden können, die ihrerseits eine radikalische Polymerisation starten können.

Bei Härtung mit Elektronenstrahlung ist die Anwesenheit solcher Photoinitiatoren dagegen nicht erforderlich.

Bei der strahlungshärtbaren Beschichtungsmasse handelt es sich bevorzugt Acryläureester, Methacrylsäureester und/oder ungesättigte Polyesterharze.

Ungesättigte Polyesterharze sind dem Fachmann an sich bekannt.

Bevorzugt handelt es sich um ein ungesättigtes Polyesterharz, das zumindest aufgebaut ist aus den Komponenten:
(a1) Maleinsäure oder deren Derivate,
(a2) mindestens eine cyclische Dicarbonsäure oder deren Derivate,
(a3) mindestens ein aliphatisches oder cycloaliphatisches Diol.

Unter Derivaten werden im Rahmen dieser Schrift bevorzugt verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- ferner Mono- und Divinylester sowie
- gemischte Ester, bevorzugt gemischte Ester mit unterschiedlichen C₁-C₄-Alkylkomponenten, besonders bevorzugt gemischte Methylethylester.

C₁-C₄-Alkyl bedeutet im Rahmen dieser Schrift Methyl, Ethyl, iso-Propyl, n-Propyl, n-Butyl, iso-Butyl, sek-Butyl und tert-Butyl, bevorzugt Methyl, Ethyl und n-Butyl, besonders bevorzugt Methyl und Ethyl und ganz besonders bevorzugt Methyl.

Es ist auch möglich, ein Gemisch aus einer Dicarbonsäure und einem oder mehreren ihrer Derivate einzusetzen. Gleichfalls ist möglich, ein Gemisch mehrerer verschiedener Derivate von einer oder mehreren Dicarbonsäuren einzusetzen.

Bei der Komponente (a1) handelt es sich um Maleinsäure oder deren Derivate, bevorzugt um Maleinsäure oder Maleinsäureanhydrid.

Bei der Komponente (a2) handelt es sich um mindestens eine, bevorzugt ein bis vier, besonders bevorzugt ein bis drei und ganz besonders bevorzugt genau eine cyclische Dicarbonsäure oder deren Derivate.

Unter einer cyclischen Verbindung wird dabei im Rahmen der vorliegenden Schrift eine Verbindung verstanden, die mindestens einen, bevorzugt ein bis zwei und besonders bevorzugt genau einen Carbo- oder Heterocyclus, bevorzugt Carbocyclus enthält. Dabei kann es sich um aromatische oder alicyclische Verbindungen handeln, wobei letztere sowohl im Ring partiell ungesättigte als auch gesättigte Verbindungen umfassen.

Bevorzugt handelt es sich bei den Cyclen um fünf- bis sechsgliedrige Cyclen, besonders bevorzugt um sechsgliedrige Cyclen.

Beispiele für aromatische Komponenten (a2) sind Phthalsäure, Isophthalsäure oder Terephthalsäure, bevorzugt ist (a2) ausgewählt aus der Gruppe bestehend aus Phthalsäure und Terephthalsäure.

Beispiele für alicyclische Komponenten (a2) sind cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure sowie Cyclohex-1-en-1,2-dicarbonsäure. Bevorzugt handelt es sich um technische Isomerengemische von Hexahydro- und Tetrahydrophthalsäure.

Bei der Komponente (a3) handelt es sich um mindestens ein, bevorzugt ein bis vier, besonders bevorzugt ein bis drei, ganz besonders bevorzugt ein bis zwei und insbesondere genau ein aliphatisches oder cycloaliphatisches Diol.

Als Diole verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol , Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole,1.1-, 1,2-, 1,3- und 1,4-Bis-(hydroxymethyl)cyclohexane, 1,1-, 1.2-, 1,3- und 1,4-Bis(hydroxy-ethyl) cyclohexane, Neopentylglykol, (2)Methyl-2,4-pentandiol, 2,4-Dimethyl-2,4-pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylen-glykol, Polyethylenglykole HO(CH₂CH₂O)ₙ-H oder Polypropylenglykole HO(CH[CH₃]CH₂O)ₙ-H, wobei n eine ganze Zahl und n>4 ist, Polyethylen-polypropylenglykole, wobei die Abfolge der Ethylenoxid- der Propylenoxid-Einheiten blockweise oder statistisch sein kann, Polytetramethylenglykole, vorzugsweise bis zu einem Molgewicht bis zu 5.000 g/mol, Poly-1,3-propandiole, vorzugsweise mit einem Molgewicht bis zu 5.000 g/mol, Polycaprolactone oder Gemische von zwei oder mehr Vertretern der voranstehenden Verbindungen.

Bevorzugt eingesetzte Diole sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol und Tripropylenglykol.

Die Diole können optional noch weitere Funktionalitäten wie beispielsweise Carbonyl, Carboxy, Alkoxycarbonyl oder Sulfonyl enthalten, wie beispielsweise Dimethylolpropionsäure oder Dimethylolbuttersäure, sowie deren C₁-C₄-Alkylester, bevorzugt weisen die Diole jedoch keine weiteren Funktionalitäten auf.

Besonders bevorzugte aliphatische Diole sind solche, die 2 bis 6 Kohlenstoffatome aufweisen. Ganz besonders bevorzugt sind die aliphatischen Diole ausgewählt aus der Gruppe bestehend aus Diethylenglykol und Neopentylglykol.

Gleichermaßen bevorzugt kann es sich bei dem Diol (a2) um cycloaliphatische Diole handeln, besonders bevorzugt um 1,1-, 1,2-, 1,3- und 1,4-Bis-(hydroxymethyl)-cyclohexane oder 2,2-Bis(4-hydroxycyclohexyl)-propan.

Neben den Aufbaukomponenten (a1), (a2) und (a3) kann das ungesättigte Polyesterharz (a) optional noch weitere Komponenten enthalten:
Optional kann als Aufbaukomponente (a4) mindestens eine andere Dicarbonsäure oder deren Derivate als (a1) und (a2) anwesend sein. Bei der Komponente (a4) kann es sich beispielsweise um andere acyclische Dicarbonsäuren handeln, bevorzugt sind Oxalsäure, Malonsäure, Bernsteinsäure, Glutarsäure, Adipinsäure, Pimelinsäure, Korksäure, Azelainsäure, Sebacinsäure, Undecan-α,ω-dicarbonsäure, Dodecan-α,ω-dicarbonsäure, 2-Methylmalonsäure, 2-Ethylmalonsäure, 2-Phenylmalonsäure, 2-Methylbernsteinsäure, 2-Ethylbernsteinsäure, 2-Phenylbernsteinsäure, Itaconsäure, 3,3-Dimethylglutarsäure oder Fumarsäure, besonders bevorzugt sind Malonsäure, Bernsteinsäure, Glutarsäure und Adipinsäure.

(a5) Des Weiteren kann optional mindestens eine Polycarbonsäure mit einer Funktionalität von 3 oder mehr oder deren Derivate anwesend sein.

Beispiele dafür sind Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren.

Des Weiteren kann als weitere optionale Aufbaukomponente (a6) ein anderes Diol als die unter (a3) beschriebenen anwesend sein.

Des Weiteren kann als weitere optionale Aufbaukomponente (a7) ein Polyol mit einer Funktionalität von 3 oder mehr anwesend sein.

Beispiele dafür sind Glycerin, Trimethylolmethan, Trimethylolethan, Trimethylolpropan, 1,2,4-Butantriol, Tris(hydroxymethyl)amin, Tris(hydroxyethyl)-amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zucker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Ethylenoxid, Propylenoxid und/oder Butylenoxid.

Die Zusammensetzung der ungesättigten Polyesterharze (a) ist in der Regel wie folgt:
(a1) 30-70 mol% bezüglich aller in (a) vorhandenen Carboxylgruppen und deren Derivate, bevorzugt 40-60 mol%,
(a2) 30-70 mol% bezüglich aller in (a) vorhandenen Carboxylgruppen und deren Derivate, bevorzugt 40-60 mol%,
(a3) 80-100 mol% bezüglich aller in (a) vorhandenen Hydroxygruppen, bevorzugt 100 mol%,
(a4) 0-20 mol% bezüglich aller in (a) vorhandenen Carboxylgruppen und deren Derivate, bevorzugt 0 mol%,
(a5) 0-5 mol% bezüglich aller in (a) vorhandenen Carboxylgruppen und deren Derivate, bevorzugt 0 mol%,
(a6) 0-20 mol% bezüglich aller in (a) vorhandenen Hydroxygruppen, bevorzugt 0 mol% und
(a7) 0-5 mol% bezüglich aller in (a) vorhandenen Hydroxygruppen, bevorzugt 0 mol%,
mit der Maßgabe, dass die Summe aller Hydroxygruppen 100 mol% und die Summe aller Carboxylgruppen 100 mol% beträgt, und die Stöchiometrie von Hydroxygruppen zu Carboxylgruppen von 1:0,85 bis 1:1,25, bevorzugt 1:0,9 bis 1:1,2 und besonders bevorzugt 1:0,95 bis 1:1,15 beträgt.

Bevorzugte ungesättigte Polyesterharze (a) weisen eine Glasübergangstemperatur Tg, gemessen nach der DSC-Methode (Differential Scanning Calorimetry) gemäß ASTM 3418/82 bei einer Aufheizrate von 20°C/min, von 0°C oder mehr, bevorzugt 10°C oder mehr und besonders bevorzugt 25°C oder mehr auf.

Bevorzugte ungesättigte Polyesterharze (a) weisen ein zahlenmittleres Molekulargewicht Mₙ von 1.000 bis 10.000 g/mol (bestimmt durch Gelpermeationschromatographie mit Polystyrol als Standard, Lösemittel Tetrahydrofuran) auf, bevorzugt von 1.500 bis 8.000 und besonders bevorzugt von 2.000 bis 5.000 g/mol.

Bevorzugt handelt es sich bei den strahlungshärtbaren Beschichtungsmassen um Polyester-, Polyether-, Carbonat-, Epoxy- oder Urethan(meth)acrylate sowie (meth)acrylierte Polyacrylate, die optional teilweise aminmodifiziert sein können.

Bei diesen handelt es sich um mindestens eine, beispielsweise ein bis vier, bevorzugt ein bis drei, besonders bevorzugt ein bis zwei und ganz besonders bevorzugt genau eine, strahlungshärtbare Verbindung mit mehr als 2, bevorzugt 3-10, besonders bevorzugt 3-6, ganz besonders bevorzugt 3-4 und insbesondere 3 radikalisch polymerisierbaren Gruppen.

Polyester(meth)acrylate sind die entsprechenden Ester von α,ß-ethylenisch ungesättigten Carbonsäuren, bevorzugt von (Meth)acrylsäure, besonders bevorzugt von Acrylsäure mit Polyesterpolyolen.

Als Polyesterpolyole können beispielsweise solche eingesetzt werden, wie sie oben für Zweikomponenten Beschichtungsmassen beschrieben worden sind.

Polyether(meth)acrylate sind die entsprechenden Ester von α,ß-ethylenisch ungesättigten Carbonsäuren, bevorzugt von (Meth)acrylsäure, besonders bevorzugt von Acrylsäure mit Polyetherolen.

Bevorzugt handelt es sich bei den Polyetherolen um Polyethylenglykol mit einer Molmasse zwischen 106 und 2.000, bevorzugt 106 bis 1.500, besonders bevorzugt 106 bis 1.000, Poly-1,2-propandiol mit einer Molmasse zwischen 134 und 1178, Poly-1,3-propandiol mit einer Molmasse zwischen 134 und 1178 und Polytetrahydrofurandiol mit einem zahlenmittleren Molekulargewicht Mₙ im Bereich von etwa 500 bis 4.000, bevorzugt 600 bis 3.000, insbesondere 750 bis 2.000.

Urethan(meth)acrylate sind z.B. erhältlich durch Umsetzung von Polyisocyanaten mit Hydroxyalkyl(meth)acrylaten und gegebenenfalls Kettenverlängerungsmitteln wie Diolen, Polyolen, Diaminen, Polyaminen oder Dithiolen oder Polythiolen. In Wasser ohne Zusatz von Emulgatoren dispergierbare Urethan-(meth)acrylate enthalten zusätzlich noch ionische und/oder nichtionische hydrophile Gruppen, welche z.B. durch Aufbaukomponenten wie Hydroxycarbonsäuren ins Urethan eingebracht werden.

Derartige Urethan(meth)acrylate enthalten als Aufbaukomponenten im Wesentlichen:
(a) mindestens ein organisches aliphatisches, aromatisches oder cycloaliphatisches Di- oder Polyisocyanat, beispielsweise mindestens eines der oben bei der Zweikomponenten Beschichtungsmassen beschriebenen Polyisocyanaten,
(b) mindestens eine Verbindung mit mindestens einer gegenüber Isocyanat reaktiven Gruppe, bevorzugt einem der oben bei den Polyacrylatpolyolen beschriebenen hydroxygruppentragenden Monomere, und mindestens einer radikalisch polymerisierbaren ungesättigten Gruppe und
(c) gegebenenfalls mindestens eine Verbindung mit mindestens zwei gegenüber Isocyanat reaktiven Gruppen, beispielsweise einem der oben bei den Polyesterolen beschriebenen mehrwertigen Alkoholen.

Die Urethan(meth)acrylate haben vorzugsweise ein zahlenmittleres Molgewicht Mₙ von 500 bis 20.000, insbesondere von 500 bis 10.000 besonders bevorzugt 600 bis 3.000 g/mol (bestimmt durch Gelpermeationschromatographie mit Tetrahydrofuran und Polystyrol als Standard).

Die Urethan(meth)acrylate haben vorzugsweise einen Gehalt von 1 bis 5, besonders bevorzugt von 2 bis 4 Mol (Meth)acrylgruppen pro 1.000 g Urethan(meth)acrylat.

Epoxid(meth)acrylate sind erhältlich durch Umsetzung von Epoxiden mit (Meth)acrylsäure. Als Epoxide in Betracht kommen z.B. epoxidierte Olefine, aromatische Glycidylether oder aliphatische Glycidylether, bevorzugt solche von aromatischen oder aliphatischen Glycidylethern.

Epoxidierte Olefine können beispielsweise sein Ethylenoxid, Propylenoxid, iso-Butylenoxid, 1-Butenoxid, 2-Butenoxid, Vinyloxiran, Styroloxid oder Epichlorhydrin, bevorzugt sind Ethylenoxid, Propylenoxid, iso-Butylenoxid, Vinyloxiran, Styroloxid oder Epichlorhydrin, besonders bevorzugt Ethylenoxid, Propylenoxid oder Epichlorhydrin und ganz besonders bevorzugt Ethylenoxid und Epichlorhydrin.

Aromatische Glycidylether sind z.B. Bisphenol-A-diglycidylether, Bisphenol-F-diglycidylether, Bisphenol-B-diglycidylether, Bisphenol-S-diglycidylether, Hydrochinondiglycidylether, Alkylierungsprodukte von Phenol/Dicyclopentadien, z.B. 2,5-bis[(2,3-Epoxypropoxy)phenyl]octahydro-4,7-methano-5H-inden) (CAS-Nr. [13446-85-0]), Tris[4-(2,3-epoxypropoxy)phenyl]methan Isomere) CAS-Nr. [66072-39-7]), Phenol basierte Epoxy Novolake (CAS-Nr. [9003-35-4]) und Kresol basierte Epoxy Novolake (CAS-Nr. [37382-79-9]).

Aliphatische Glycidylether sind beispielsweise 1,4-Butandiol-diglycidether, 1,6-Hexandioldiglycidylether, Trimethylolpropan-triglycidylether, Pentaerythrittetraglycidylether, 1,1,2,2-tetrakis[4-(2,3-epoxypropoxy)phenyl]ethan (CAS-Nr. [27043-37-4]), Diglycidylether von Polypropylenglykol (α,ω-bis(2,3-epoxypropoxy)poly-(oxypropylen) (CAS-Nr. [16096-30-3]) und von hydriertem Bisphenol A (2,2-bis[4-(2,3-epoxypropoxy)cyclohexyl]propan, CAS-Nr. [13410-58-7]).

Die Epoxid(meth)acrylate haben vorzugsweise ein zahlenmittleres Molgewicht Mₙ von 200 bis 20.000, besonders bevorzugt von 200 bis 10.000 g/mol und ganz besonders bevorzugt von 250 bis 3.000 g/mol; der Gehalt an (Meth)acrylgruppen beträgt vorzugsweise 1 bis 5, besonders bevorzugt 2 bis 4 pro 1.000 g Epoxid-(meth)acrylat (bestimmt durch Gelpermeationschromatographie mit Polystyrol als Standard und Tetrahydrofuran als Elutionsmittel).

(Meth)acrylierte Poylacrylate sind die entsprechenden Ester von α,ß-ethylenisch ungesättigten Carbonsäuren, bevorzugt von (Meth)acrylsäure, besonders bevorzugt von Acrylsäure mit Polyacrylatpolyolen, erhältlich durch Veresterung von Polyacrylatpolyolen mit (Meth)acrylsäure.

Bei den Polyacrylatpolyolen kann es sich beispielsweise um solche handeln, wie sie oben bei den Zweikomponenten Beschichtungsmassen beschrieben worden sind.

Carbonat(meth)acrylate sind ebenfalls mit verschiedenen Funktionalitäten erhältlich.

Das zahlenmittlere Molekulargewicht Mₙ der Carbonat(meth)acrylate ist vorzugsweise kleiner 3.000 g/mol, besonders bevorzugt kleiner 1.500 g/mol, besonders bevorzugt kleiner 800 g/mol (bestimmt durch Gelpermeationschromatographie mit Polystyrol als Standard, Lösemittel Tetrahydrofuran).

Die Carbonat(meth)acrylate sind in einfacher Weise erhältlich durch Umesterung von Kohlensäureestern mit mehrwertigen, vorzugsweise zweiwertigen Alkoholen (Diolen, z.B. Hexandiol) und anschließende Veresterung der freien OH-Gruppen mit (Meth)acrylsäure oder auch Umesterung mit (Meth)acrylsäureestern, wie es z.B. in EP 0 092 269 A1 beschrieben ist. Erhältlich sind sie auch durch Umsetzung von Phosgen, Harnstoffderivaten mit mehrwertigen, z.B. zweiwertigen Alkoholen.

Denkbar sind auch (Meth)acrylate von Polycarbonatpolyolen, wie das Reaktionsprodukt aus einem der genannten Di- oder Polyole und einem Kohlensäureester sowie einem hydroxylgruppenhaltigen (Meth)acrylat.

Geeignete Kohlensäureester sind z.B. Ethylen-, 1,2- oder 1,3-Propylencarbonat, Kohlensäuredimethyl-, -diethyl- oder -dibutylester.

Geeignete hydroxygruppenhaltige (Meth)acrylate sind beispielsweise 2-Hydroxyethyl(meth)acrylat, 2- oder 3-Hydroxypropyl(meth)acrylat, 1,4-Butandiolmono(meth)acrylat, Neopentylglykolmono(meth)acrylat, Glycerinmono- und di(meth)acrylat, Trimethylolpropanmono- und di(meth)acrylat sowie Pentaerythritmono-, -di- und -tri(meth)acrylat.

Besonders bevorzugte Carbonat(meth)acrylate sind solche der Formel: 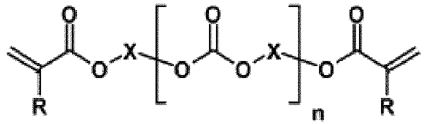 worin R für H oder CH₃, X für eine C₂-C₁₈ Alkylengruppe und eine ganze Zahl von 1 bis 5, vorzugsweise 1 bis 3 steht.

R steht vorzugsweise für H und X steht vorzugsweise für C₂- bis C₁₀-Alkylen, beispielsweise 1,2-Ethylen, 1,2-Propylen, 1,3-Propylen, 1,4-Butylen oder 1,6-Hexylen, besonders bevorzugt für C₄- bis C₈-Alkylen. Ganz besonders bevorzugt steht X für C₆-Alkylen.

Vorzugsweise handelt es sich bei den Carbonat(meth)acrylaten um aliphatische Carbonat(meth)acrylate.

In einer bevorzugten Ausführungsform ist die strahlungshärtbare Beschichtungsmasse wie folgt aufgebaut:
- mindestens ein Polyester-, Polyether-, Carbonat-, Epoxy-und/oder Urethan-(meth)acrylat oder ungesättigtes Polyesterharz,
- optional mindestens einen Reaktivverdünner,
- optional mindestens ein Photoinitiator,
- optional mindestens ein Lösungsmittel,
- optional mindestens einen Stabilisator,
- optional mindestens Additiv, ausgewählt aus der Gruppe bestehend aus Aktivatoren, Füllmittel, Pigmente, Farbstoffe, Verdicker, thixotrope Agentien, oberflächenaktive Agentien, Viskositätsmodifikatoren, Plastifizierer und Chelatbildner.

Beispielsweise kann eine strahlungshärtbare Beschichtung zusammengesetzt sein wie folgt:
- 40 bis 100 Gew.-% mindestens eines Polyester-, Polyether-, Carbonat-, Epoxy- oder Urethan(meth)acrylats oder eines ungesättigten Polyesterharzes,
- 0 bis 60 Gew.-% mindestens eines Reaktivverdünners,
- 0 bis 5 Gew.-% mindestens eines Photoinitiators,
- 0 bis 20 Gew.-% mindestens eines Lösungsmittels,
- 0 bis 5 Gew.-% mindestens eines Stabilisators,
- 0 bis 5 Gew.-% mindestens eines Additivs, ausgewählt aus der Gruppe bestehend aus Aktivatoren, Füllmittel, Pigmente, Farbstoffe, Verdicker, thixotrope Agentien, oberflächenaktive Agentien, Viskositätsmodifikatoren, Plastifizierer und Chelatbildner,
mit der Maßgabe, dass die Summe immer 100 Gew.-% ergibt.

Im Einzelfall kann es sinnvoll sein, geringere Mengen mindestens eines Polyester-, Polyether-, Carbonat-, Epoxy- oder Urethan(meth)acrylats oder eines ungesättigten Polyesterharzes als die angegeben 40 Gew.-% in der strahlungshärtbaren Beschichtungsmasse einzusetzen, besonders dann, wenn der mindestens eine Reaktivverdünner die Anforderungen an Viskosität und E-Modul erfüllt, ohne dass es die Anwesenheit eines Polyester-, Polyether-, Carbonat-, Epoxy- oder Urethan(meth)acrylats oder eines ungesättigten Polyesterharzes bedarf. In diesem Fall kann der Reaktivverdünner bis zu 80, teilweise bis zu 90 wenn nicht sogar bis zu 100 Gew.-% der strahlungshärtbaren Beschichtungsmasse oder der strahlungshärtbaren Komponenten innerhalb der Beschichtungsmasse ausmachen. Im Gegenzug kann der Anteil des Polyester-, Polyether-, Carbonat-, Epoxy- oder Urethan(meth)acrylats oder des ungesättigten Polyesterharzes entsprechend nicht mehr als 20, nicht mehr als 10 oder sogar 0 Gew.-% ausmachen.

Bevorzugte strahlungshärtbare Beschichtungsmassen sind solche, die eine Doppelbindungsdichte von nicht mehr als 14 mol/kg aufweisen, bevorzugt nicht mehr als 10 mol/kg, besonders bevorzugt nicht mehr als 9 mol/kg, ganz besonders bevorzugt nicht mehr als 8 und insbesondere nicht mehr als 7 mol/kg.

In der Regel ist jedoch zumindest eine Doppelbindungsdichte von 0,1 mol/kg erforderlich, bevorzugt mindestens 0,5 mol/kg, besonders bevorzugt mindestens 1 mol/kg, ganz besonders bevorzugt mindestens 2 und insbesondere mindestens 2,5 mol/kg.

Unter Doppelbindungsdichte wird die Stoffmenge an polymerisierbaren Gruppen, also beispielsweise Vinylether-, Acrylsäure- und Methacrylsäuregruppen, bevorzugt Acrylsäure- und Methacrylsäuregruppen pro kg Bindemittel verstanden, wobei als Bindemittel die Komponenten Polyester-, Polyether-, Carbonat-, Epoxy- oder Urethan(meth)acrylat, ungesättigtes Polyesterharz sowie Reaktivverdünner gerechnet werden.

Wie oben ausgeführt ist ein Photoinitiator dann erforderlich, wenn in dem erfindungsgemäßen Verfahren die Beschichtungsmasse mit (N)IR- und/oder UV-Strahlung gehärtet wird, nicht jedoch, wenn eine Härtung per Elektronenstrahlung erfolgt.

Unter einem Reaktivverdünner werden dabei solche Verbindungen verstanden, die eine Viskosität bei 25°C zwischen 1 und 500 mPas, bevorzugt zwischen 1 und 200 mPas und besonders bevorzugt zwischen 1 und 100 mPas aufweisen. In der Regel weisen diese Reaktivverdünner nicht mehr als sechs, bevorzugt bis zu vier, besonders bevorzugt bis zu drei, ganz besonders bevorzugt ein bis drei und insbesondere zwei bis drei strahlungshärtbare Gruppen auf.

Dies können beispielsweise multifunktionelle (Meth)acrylsäureester sein:
Beispiele für multifunktionelle, polymerisationsfähige Verbindungen sind Ethylen-glykoldiacrylat, 1,2-Propandioldiacrylat, 1,3-Propandioldiacrylat, 1,4-Butandioldiacrylat, 1,3-Butandioldiacrylat, 1,5-Pentandioldiacrylat, 1,6-Hexandioldiacrylat, 1,8-Octandioldiacrylat, Neopentylglykoldiacrylat, 1,1-, 1,2-, 1,3- und 1,4-Cyclohexandimethanoldiacrylat, 1,2-, 1,3- oder 1,4-Cyclohexandioldiacrylat.
Beispiele für multifunktionelle, polymerisationsfähige Verbindungen sind Trimethylolpropantriacrylat, Ditrimethylolpropanpenta- oder -hexaacrylat, Pentaerythrittri- oder - tetraacrylat, Glycerindi- oder -triacrylat, sowie Di- und Polyacrylate von Zuckeralkoholen, wie beispielsweise Sorbit, Mannit, Diglycerol, Threit, Erythrit, Adonit (Ribit), Arabit (Lyxit), Xylit, Dulcit (Galactit), Maltit oder Isomalt.

Weitere Beispiele für sind (Meth)Acrylate von Verbindungen der Formel (IIa) bis (IId), 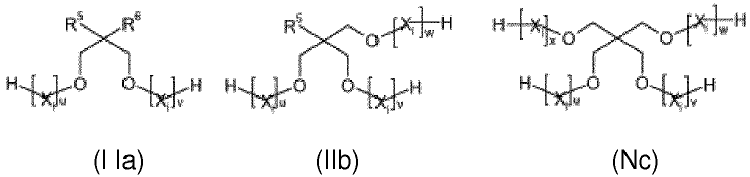 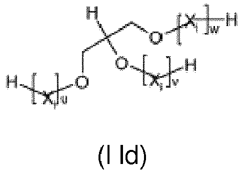 worin
R⁵ und R⁶ unabhängig voneinander Wasserstoff oder gegebenenfalls durch Aryl, Alkyl, Aryloxy, Alkyloxy, Heteroatome und/oder Heterocyclen substituiertes C₁ - C₁₈-Alkyl,
u, v, w, x unabhängig voneinander je für eine ganze Zahl von 1 bis 10, bevorzugt 1 bis 5 und besonders bevorzugt 1 bis 3 steht und
jedes Xᵢ für i=1 bis u, 1 bis v, 1 bis w und 1 bis x unabhängig voneinander ausgewählt sein kann aus der Gruppe -CH₂-CH₂-O-, -CH₂-CH(CH₃)-O-, -CH(CH₃)-CH₂-O-, -CH₂-C(CH₃)₂-O-, -C(CH₃)₂-CH₂-O-, -CH₂-CHVin-O-, -CHVin-CH₂-O-, -CH₂-CHPh-O- und -CHPh-CH₂-O-, bevorzugt aus der Gruppe -CH₂-CH₂-O-, -CH₂-CH(CH₃)-O- und -CH(CH₃) -CH₂-O-, und besonders bevorzugt -CH₂-CH₂-O-,
worin Ph für Phenyl und Vin für Vinyl steht.

Darin bedeuten gegebenenfalls durch Aryl, Alkyl, Aryloxy, Alkyloxy, Heteroatome und/oder Heterocyclen substituiertes C₁ - C₁₈-Alkyl beispielsweise Methyl, Ethyl, Propyl, Isopropyl, n-Butyl, sec-Butyl, tert.-Butyl, Pentyl, Hexyl, Heptyl, Octyl, 2-Etylhexyl, 2,4,4-Trimethylpentyl, Decyl, Dodecyl, Tetradecyl, Hetadecyl, Octadecyl, 1,1-Dimethylpropyl, 1,1-Dimethylbutyl, 1,1,3,3-Tetramethylbutyl, bevorzugt Methyl, Ethyl oder n-Propyl, ganz besonders bevorzugt Methyl oder Ethyl.

Bevorzugt handelt es sich dabei um (Meth)acrylate von ein- bis zwanzigfach und besonders bevorzugt drei- bis zehnfach ethoxyliertem, propoxyliertem oder gemischt ethoxyliertem und propoxyliertem und insbesondere ausschließlich ethoxyliertem Neopentylglykol, Trimethylolpropan, Trimethylolethan oder Pentaerythrit.

Bevorzugte multifunktionelle, polymerisationsfähige Verbindungen sind Ethylenglykoldiacrylat, 1,2-Propandioldiacrylat, 1,3-Propandioldiacrylat, 1,4-Butandioldiacrylat, 1,6-Hexandioldiacrylat, Dipropylenglykoldiacrylat, Trimethylolpropantriacrylat, Pentaerythrittetraacrylat und Triacrylat von ein- bis zwanzigfach alkoxyliertem, besonders bevorzugt Glycerin oder ethoxyliertem Trimethylolpropan.

Ganz besonders bevorzugte multifunktionelle, polymerisationsfähige Verbindungen sind 1,4-Butandioldiacrylat, 1,6-Hexandioldiacrylat, Trimethylolpropantriacrylat, Pentaerythrittetraacrylat und Triacrylat von ein- bis zwanzigfach ethoxyliertem Trimethylolpropan.

Denkbar sind auch einwertige (Meth)acrylate, beispielsweise (2-Phenoxyethylacrylat) oder höherethoxylierte Phenoxyacrylate, Ethyldiglykolacrylat, 4-tert.-Butylcyclohexylacrylat, Trimethylolpropanformalmonoacrylat, Isobornylacrylat, Tetrahydrofurfuryacrylatl, 2-(2-Ethoxyethoxy)ethylacrylat, sowie Lauryl-, Stearyl-, Isodecyl-, Octyl- und Decylacrylat.

Denkbar sind auch Ester von α,ß-ethylenisch ungesättigten Carbonsäuren, bevorzugt von (Meth)acrylsäure mit Alkoholen, die 1 bis 20 C-Atome aufweisen, bevorzugt gegebenenfalls hydroxysubstituierte 1 bis 20 C-Atome aufweisende Alkanole, z.B. (Meth)acrylsäuremethylester, (Meth)acrylsäureethylester, (Meth)-acrylsäure-n-butylester, (Meth)acrylsäure-2-ethylhexylester, 2-Hydroxyethyl(meth)-acrylat, 2-Hydroxypropyl(meth)acrylat oder 4-Hydroxybutyl(meth)acrylat.

Weiterhin denkbar sind Ester der (Meth)acrylsäure mit Cycloalkanolen oder Bicycloalkanolen, wobei das Cycloalkanol oder Bicycloalkanol von 3 bis 20 Kohlenstoffatomen, bevorzugt 5 bis 10 Kohlenstoffatome aufweist und ggf. mit einem oder mehreren C₁- bis C₄-Alkylresten substituiert sein kann.

Beispiele für Cycloalkanol und Bicycloalkanol sind Cyclopentanol, Cyclohexanol, Cyclooctanol, Cyclododecanol, 4-Methylcyclohexanol, 4-iso-Propylcyclohexanol, 4-tert.Butylcyclohexanol (bevorzugt cis konfiguriert), Dihydrodicyclopentadienylalkohol und Norbornylalkohol. Bevorzugt ist Cyclohexanol und 4-tert.Butylcyclohexanol.

UV-Photoinitiatoren können beispielsweise dem Fachmann bekannte Photoinitiatoren sein, z.B. solche in "Advances in Polymer Science", Volume 14, Springer Berlin 1974 oder in K. K. Diet-liker, Chemistry and Technology of UV- and EB-Formulation for Coatings, Inks and Paints, Volume 3; Photoinitiators for Free Radical and Cationic Polymerization, P. K. T. Oldring (Eds), SITA Technology Ltd, London, genannten.

In Betracht kommen beispielsweise Phosphinoxide, Benzophenone, α-Hydroxy-alkyl-aryl-ketone, Thioxanthone, Anthrachinone, Ace-tophenone, Benzoine und Benzoinether, Ketale, Imidazole oder Phenylglyoxylsäuren und Gemische davon.

Phosphinoxide sind beispielsweise Mono- oder Bisacylphosphinoxide, wie sie z.B. in EP 7 508 A2, EP 57 474 A2, DE 196 18 720 A1, EP 0 495 751 A1 oder EP 0 615 980 A2 beschrieben sind, beispielsweise 2,4,6-Trimethylbenzoyldiphenylphosphinoxid, Ethyl-2,4,6-trimethylbenzoylphenylphosphinat oder Bis(2,6-dimethoxybenzoyl)-2,4,4-trimethylpentylphosphinoxid.

Benzophenone sind beispielsweise Benzophenon, 4-Aminobenzophenon, 4,4'-Bis(dimethylamino)benzophenon, 4-Phenylbenzophenon, 4-Chlorbenzophenon, Michlers Keton, o-Methoxybenzophenon, 2,4,6-Trimethylbenzophenon, 4-Methylbenzophenon, 2,4-Dimethylbenzophenon, 4-Isopropylbenzophenon, 2-Chlorbenzophenon, 2,2'-Dichlorbenzophenon, 4-Methoxybenzophenon, 4-Propoxybenzophenon oder 4-Butoxybenzophenon, α-Hydroxy-alkyl-aryl-ketone sind beispielsweise 1-Benzoylcyclohexan-1-ol (1-Hydroxycyclohexylphenylketon), 2-Hydroxy-2, 2-dimethylacetophenon, (2-Hydroxy-2-methyl-1-phenyl-propan-1-on), 1-Hydroxyaceto-phenon, 1-[4-(2-Hydroxyethoxy)-phenyl]-2-hydroxy-2-methyl-1-propan-1-on oder Polymeres, das 2-Hydroxy-2-methyl-1-(4-isopropen-2-yl-phenyl)-propan-1-on einpolymerisiert enthält.

Xanthone und Thioxanthone sind beispielsweise 10-Thioxanthenon, Thioxanthen-9-on, Xanthen-9-on, 2,4-Dimethylthioxanthon, 2,4-Diethylthioxanthon, 2,4-Diisopropylthioxanthon, 2,4-Dichlorthioxanthon oder Chloroxanthenon,

Anthrachinone sind beispielsweise ß-Methylanthrachinon, tert-Butylanthrachinon, Anthrachinoncarbonsäureester, Benz[de]-anthracen-7-on, Benz[a]anthracen-7,12-dion, 2-Methylanthrax-chinon, 2-Ethylanthrachinon, 2-tert-Butylanthrachinon, 1-Chlor-anthrachinon oder 2-Amylanthrachinon.

Acetophenone sind beispielsweise Acetophenon, Acetonaphthochinon, Valerophenon, Hexanophenon, α-Phenylbutyrophenon, p-Morpholinopropiophenon, Dibenzosuberon, 4-Morpholinobenzophenon, p-Diacetylbenzol, 4'-Methoxyacetophenon, α-Tetralon, 9-Acetylphenanthren, 2-Acetylphenanthren, 3-Acetylphenanthren, 3-Acetylindol, 9-Fluorenon, 1-Indanon, 1,3,4-Triacetylbenzol, 1-Acetonaphthon, 2-Acetonaphthon, 2,2-Dimethoxy-2-phenylacetophenon, 2,2-Diethoxy-2-phenylacetophenon, 1,1-Dichloracetophenon, 1-Hydroxyacetophenon, 2,2-Diethoxyacetophenon, 2-Methyl-1-[4-(methylthio)phenyl]-2-morpholinopropan-1-on, 2,2-Dimethoxy-1,2-diphenylethan-2-on oder 2-Benzyl-2-dimethylamino-1-(4-morpholinophenyl)-butan-1-on.

Benzoine und Benzoinether sind beispielsweise 4-Morpholino-deoxybenzoin, Benzoin, Benzoinisobutylether, Benzointetrahydropyranylether, Benzoinmethylether, Benzoinethylether, Benzoinbutylether, Benzoinisopropylether oder 7-H-Benzoinmethylether.

Ketale sind beispielsweise Acetophenondimethylketal, 2,2-Diethoxyacetophenon, oder Benzilketale, wie Benzildimethylketal.

Phenylglyoxylsäuren sind beispielsweise in DE 198 26 712 A1, DE 199 13 353 A1 oder WO 98/33761 A1 beschrieben.

Weiterhin verwendbare Photoinitiatoren sind beispielsweise Benzaldehyd, Methylethylketon, 1-Naphthaldehyd, Triphenylphosphin, Tri-o-Tolylphosphin oder 2,3-Butandion.

Typische Gemische umfassen beispielsweise 2-Hydroxy-2-methyl-1-phenyl-propan-2-oη und 1-Hydroxy-cyclohexyl-phenylketon, Bis(2,6-dimethoxybenzoyl)-2,4,4-trimethylpentylphosphinoxid und 2-Hydroxy-2-methyl-1-phenyl-propan-1-on, Benzophenon und 1-Hydroxy-cyclohexyl-phenylketon, Bis(2,6-dimethoxybenzoyl)-2,4,4-trimethylpentylphosphinoxid und 1-Hydroxy-cyclohexyl-phenylketon, 2,4,6-Trimethylbenzoyldiphenylphosphinoxid und 2-Hydroxy-2-methyl-1-phenyl-propan1-on, 2,4,6-Trimethylbenzophenon und 4-Methylbenzophenon oder 2,4,6-Trimethylbenzophenon und 4-Methylbenzophenon und 2,4,6-Trimethylbenzoyldiphenyl-phosphinoxid.

Bevorzugt unter diesen Photoinitiatoren sind 2,4,6-Trimethylbenzoyldiphenylphosphinoxid, Ethyl-2,4,6-trimethylbenzoyl-phenylphosphinat, Bis-(2,4,6-trimethylbenzoyl)-phenylphosphin-oxid, Benzophenon, 1-Benzoylcyclohexan-1-ol, 2-Hydroxy-2,2-dimethylacetophenon und 2,2-Dimethoxy-2-phenylacetophenon.

Weiterhin kann mindestens ein Stabilisator enthalten sein.

Geeignete Stabilisatoren umfassen typische UV-Absorber wie Oxanilide, Triazine und Benzotriazol (letztere erhältlich als Tinuvin®-Marken der Ciba-Spezialitätenchemie) und Benzophenone. Diese können allein oder zusammen mit geeigneten Radikalfängern, beispielsweise sterisch gehinderten Aminen wie 2,2,6,6-Tetramethylpiperidin, 2,6-Di-tert.-butylpiperidin oder deren Derivaten, z.B. Bis-(2,2,6,6-tetra-methyl-4-piperidyl)-sebacinat, eingesetzt werden. Stabilisatoren werden üblicherweise in Mengen von 0,1 bis 5,0 Gew.-%, bezogen auf die in der Zubereitung enthaltenen festen Komponenten, eingesetzt.

Ferner können die im erfindungsgemäßen Verfahren einsetzbaren Beschichtungsmassen zusätzlich 0 bis 10 Gew.-% weitere Additive enthalten.

Als weitere lacktypische Additive können Aktivatoren, Füllmittel, Pigmente, Farbstoffe, Verdicker, thixotrope Agentien, oberflächenaktive Agentien, Viskositätsmodifikatoren, Plastifizierer oder Chelatbildner verwendet werden.

Weiterhin können ein oder mehrere thermisch aktivierbare Initiatoren zugesetzt werden, z.B. Kaliumperoxodisulfat, Dibenzoylperoxid, Cyclohexanonperoxid, Di-tert.-Butylperoxid, Azobis-iso-butyronitril, Cyclohexylsulfonylacetylperoxid, Diisopropylpercarbonat, tert-Butylperoktoat oder Benzpinakol, sowie beispielsweise solche thermisch aktivierbare Initiatoren, die eine Halbwertszeit bei 80°C von mehr als 100 Stunden aufweisen, wie Di-tert.-Butylperoxid, Cumolhydroperoxid, Dicumylperoxid, tert.-Butylperbenzoat, silylierte Pinakole, die z. B. unter dem Handelsnamen ADDID 600 der Firma Wacker kommerziell erhältlich sind oder hydroxylgruppenhaltige Amin-N-Oxide, wie 2,2,6,6-Tetramethylpiperidin-N-oxyl, 4-Hydroxy-2,2,6,6-Tetramethylpiperidin-N-oxyl, etc.

Weitere Beispiele geeigneter Initiatoren sind in "Polymer Handbook", 2. Aufl., Wiley & Sons, New York beschrieben.

Als Verdicker kommen neben radikalisch (co)polymerisierten (Co)Polymerisaten, übliche organische und anorganische Verdicker wie Hydroxymethylcellulose oder Bentonit in Betracht.

Als Chelatbildner können z.B. Ethylendiaminessigsäure und deren Salze sowie ß-Diketone verwendet werden.

Geeignete Füllstoffe umfassen Silikate, z.B. durch Hydrolyse von Siliciumtetrachlorid erhältliche Silikate wie Aerosil® der Fa. Degussa, Kieselerde, Talkum, Aluminiumsilikate, Magnesiumsilikate, Calciumcarbonate etc.

Wenn derartige Füllstoffe oder sonstige Feststoffpartikel den Beschichtungsmassen zugefügt werden, so ist darauf zu achten, dass diese Teilchengrößen aufweisen, die unterhalb der auszubildenden Mikrostrukturen liegen, bevorzugt so deutlich unterhalb, dass diese Partikel die Ausbildung der Mikrostrukturen nicht beeinflussen.

Des Weiteren können die Beschichtungsmassen ein Lösungsmittel enthalten, beispielsweise Butylacetat, Essigester, Methoxypropylacetat, Toluol, Xylol, fluorierte Aromaten, aliphatische und aromatische Kohlenwasserstoffgemische.

Bevorzugt werden die Beschichtungsmassen jedoch frei von Lösungsmittel aufgetragen.

Die Beschichtung der Substrate mit den Beschichtungsmassen erfolgt nach üblichen, dem Fachmann bekannten Verfahren, wobei man eine Beschichtungsmasse auf das zu beschichtende Substrat in der gewünschten Stärke aufbringt und gegebenenfalls trocknet. Dieser Vorgang kann gewünschtenfalls einoder mehrfach wiederholt werden. Das Aufbringen auf das Substrat kann in bekannter Weise, z.B. durch Spritzen, Spachteln, Rakeln, Bürsten, Rollen, Walzen, Gießen, Laminieren, Hinterspritzen oder Coextrudieren erfolgen. Die Beschichtungsstärke liegt in der Regel in einem Bereich von etwa 3 bis 1.000 g/m² und vorzugsweise 10 bis 200 g/m².

Denkbar ist es, die Beschichtungsmasse auf Glas, beispielsweise Quarzglas aufzutragen.

Die Substratschicht besteht vorzugsweise aus einem thermoplastischen Polymer, insbesondere Polymethylmethacrylate, Polybutylmethacrylate, Polyethylenterephthalate, Polybutylenterephthalate, Polyvinylidenflouride, Polyvinylchloride, Polyester, Polyolefine, Acrylnitrilethylenpropylendienstyrolcopolymere (A-EPDM), Polyetherimide, Polyetherketone, Polyphenylensulfide, Polyphenylenether oder deren Mischungen.

Weiterhin genannt seien Polyethylen, Polypropylen, Polystyrol, Polybutadien, Polyester, Polyamide, Polyether, Polycarbonat, Polyvinylacetal, Polyacrylnitril, Polyacetal, Polyvinylalkohol, Polyvinylacetat, Phenolharze, Harnstoffharze, Melaminharze, Alkydharze, Epoxidharze oder Polyurethane, deren Block- oder Pfropfcopolymere und Blends davon.

Bevorzugt genannt seien ABS, AES, AMMA, ASA, EP, EPS, EVA, EVAL, HDPE, LDPE, MABS, MBS, MF, PA, PA6, PA66, PAN, PB, PBT, PBTP, PC, PE, PEC, PEEK, PEI, PEK, PEP, PES, PET, PETP, PF, PI, PIB, PMMA, POM, PP, PPS, PS, PSU, PUR, PVAC, PVAL, PVC, PVDC, PVP, SAN, SB, SMS, UF, UP-Kunststoffe (Kurzzeichen gemäß DIN 7728) und aliphatische Polyketone.

Besonders bevorzugte Substrate sind Polyolefine, wie z.B. PP (Polypropylen), das wahlweise isotaktisch, syndiotaktisch oder ataktisch und wahlweise nicht-orientiert oder durch uni- oder bisaxiales Recken orientiert sein kann, SAN (Styrol-Acrylnitril-Copolymere), PC (Polycarbonate), PMMA (Polymethylmethacrylate), PBT (Poly(butylenterephthalat)e), PA (Polyamide), ASA (Acrylnitril-Styrol-Acrylester-Copolymere) und ABS (Acrylnitril-Butadien-Styrol-Copolymere), sowie deren physikalische Mischungen (Blends). Besonders bevorzugt sind PP, SAN, ABS, ASA sowie Blends von ABS oder ASA mit PA oder PBT oder PC.

Ganz besonders bevorzugt ist PET, PP, PE und Polymethylmethacrylat (PMMA) oder schlagzähmodifiziertes PMMA.

Die Dicke des Substrates beträgt vorzugsweise 50 µm bis zu 5 mm. Besonders bevorzugt ist eine Schichtdicke von 100 bis 1.000 µm, insbesondere 100 bis 500 µm. Im nächsten Schritt wird eine Feinstruktur durch eine Matrize geformt, welche das Negativbild einer Feinstruktur aufweist. Es versteht sich von selbst, dass die Matrize dem zu erzielenden Aspektverhältnis zumindest entsprechen muss, d.h. kein kleineres als das geforderte Aspektverhältnis aufweisen darf. Dabei kann die Matrize gegen die auf das Substrat aufgetragene Beschichtungsmasse gedrückt werden. Dies kann schrittweise, beispielsweise durch Stempeln oder Prägen, aber auch kontinuierlich, beispielsweise durch Rollen und Walzen, geschehen. Gegebenenfalls kann dieser Vorgang durch Anlegen eines Unterdrucks oder eines Überdruckes bzw. einer Andruckrolle auf der Rückseite des Substrats unterstützt werden, damit auch feine Strukturen der Matrize abgebildet werden.

In einer weiteren Ausführungsform enthält das Substrat die Matrize, welche das Negativ einer Mikrostruktur aufweist. In diesem Fall handelt es sich bei dem Substrat bevorzugt um eine Struktur aus Elastomeren, wie Polydimethylsiloxan, oder gehärteten Photolacken. Durch das Auftragen der Beschichtungsmasse auf die Matrize füllt die Beschichtungsmasse die Matrize der Mikrostruktur aus. Dies kann beispielsweise durch Unterdruck unterstützt werden.

Nach dem Auftragen auf die Matrize kann auf die Beschichtungsmasse ein weiteres Substrat aufgebracht werden. Die strukturierte Beschichtungsmasse wird dann zusammen mit diesem Substrat von der Matrize abgetrennt. Dieses Substrat entspricht dem vorstehend beschriebenen Substrat für die erste Ausführungsform. Auf diese Weise wird auf diesem Substrat eine feinstrukturierte Oberfläche erhalten.

Nach dem Auftragen der Beschichtungsmasse wird diese gegebenenfalls getrocknet und mit Elektronenstrahlen oder Belichtung unter sauerstoffhaltiger Atmosphäre oder bevorzugt unter Inertgas gehärtet, gegebenenfalls bei Temperaturen bis zur Höhe der Trocknungstemperatur.

Die Trocknung und/oder Härtung kann vor und/oder nach dem Abtrennen der feinstrukturierten Oberfläche von der Matrize durchgeführt werden.

In einer weiteren Ausführungsform wird die Trocknung und/oder Härtung vor dem Abtrennen durchgeführt. Es können sich aber auch noch weitere Trocknungs- bzw. Härtungsschritte nach dem Abtrennen von der Matrize anschließen.

Dies ist begrenzt durch die Thermostabilität des Substrats.

Die Strahlungshärtung erfolgt mit energiereichem Licht, z.B. (N)IR-, VIS-, UV-Licht oder Elektronenstrahlen. Die Strahlungshärtung kann bei höheren Temperaturen erfolgen.

Weiterhin wird ein Verfahren zum Beschichten von Substraten offenbart, bei dem man die beschriebenen Beschichtungsmasse oder solche enthaltende Formulierungen, gegebenenfalls mit thermisch härtbaren Harzen versetzt, auf das Substrat aufbringt, trocknet, und nach Formung der Feinstruktur anschließend mit Elektronenstrahlen oder UV-Belichtung unter sauerstoffhaltiger Atmosphäre oder bevorzugt unter Inertgas härtet, gegebenenfalls bei Temperaturen bis zur Höhe der Trocknungstemperatur.

Als Strahlungsquellen für die Strahlungshärtung geeignet sind z.B. Quecksilber-Niederdruckstrahler, -Mitteldruckstrahler, Hochdruckstrahler sowie Leuchtstoffröhren, Impulsstrahler, Metallhalogenidstrahler, LED, Elektronenblitzeinrichtungen, wodurch eine Strahlungshärtung ohne Photoinitiator möglich ist, oder Excimerstrahler. Die Strahlungshärtung erfolgt durch Einwirkung energiereicher Strahlung, also UV-Strahlung oder Tageslicht, vorzugsweise Licht im Wellenlängenbereich von λ=200 bis 700 nm, besonders bevorzugt von λ=200 bis 500 nm und ganz besonders bevorzugt λ=250 bis 400 nm, oder durch Bestrahlung mit energiereichen Elektronen (Elektronenstrahlung; 150 bis 300 keV). Als Strahlungsquellen dienen beispielsweise Hochdruckquecksilberdampflampen, Laser, gepulste Lampen (Blitzlicht), Halogenlampen oder Excimerstrahler. Die üblicherweise zur Vernetzung ausreichende Strahlungsdosis bei UV-Härtung liegt im Bereich von 80 bis 3.000 mJ/cm².

Selbstverständlich sind auch mehrere Strahlungsquellen für die Härtung einsetzbar, z.B. zwei bis vier.

Diese können auch in jeweils unterschiedlichen Wellenlängenbereichen strahlen.

Die Bestrahlung kann gegebenenfalls auch unter Ausschluss von Sauerstoff, z.B. unter Inertgas-Atmosphäre, durchgeführt werden. Als Inertgase eignen sich vorzugsweise Stickstoff, Edelgase, Kohlendioxid, oder Verbrennungsgase. Des Weiteren kann die Bestrahlung erfolgen, indem die Beschichtungsmasse mit transparenten Medien abgedeckt wird. Transparente Medien sind z. B. Kunststofffolien, Glas oder Flüssigkeiten, z.B. Wasser. Besonders bevorzugt ist eine Bestrahlung in der Weise, wie sie in der DE 199 57 900 A1 beschrieben ist.

In einer bevorzugten Ausführungsform erfolgt die Härtung in Schritt c) durch Bestrahlung durch das Substrat hindurch.

Dabei ist es erforderlich, dass die Durchlässigkeit des Substrats für die eingesetzte Strahlung abgestimmt ist auf den eingesetzten Photoinitiator.

So ist beispielsweise PET durchlässig für Strahlung mit einer Wellenlänge unterhalb 300 nm. Als Photoinitiatoren, die bei dieser Strahlung Radikale erzeugen, kommen beispielsweise 2,4,6-Trimethylbenzoyldiphenylphosphinoxid, Ethyl-2,4,6-trimethylbenzoylphenylphosphinat und Bis-(2,4,6-trimethylbenzoyl)-phenylphosphinoxid in Betracht.

Falls das Substrat die Matrize enthält und ein weiteres Substrat aufgebracht wird, kann die Bestrahlung auch durch dieses zweite Substrat hindurch durchgeführt werden.

Die beschriebenen Polymere zeichnen sich durch eine besonders hohe Strukturtreue aus. Nur wenn diese gegeben ist, ist es möglich die Matrize genau abzuformen.

Strukturtreue bedeutet, dass die erhaltene Strukturierung der Oberfläche durch das Polymer in hoher Auflösung wiedergegeben wird. Dies betrifft insbesondere die Schärfe der Kanten und eventuelle Strukturierung von Flächen. Es kann allerdings zu einer leichten Streckung der Struktur senkrecht zur Oberfläche des Substrats kommen. So kann die Struktur durch das Abziehen der Matrize etwas in diese Richtung gestreckt werden (beispielsweise um 20 bis 50 %). Dabei weisen die Strukturen ein Seitenverhältnis von Breite zu Höhe von 1:10 bis 10:1 bevorzugt zwischen 3:1 und 1:3 auf.

Ebenfalls bevorzugte Aspektverhältnisse wurden bereits für das Verfahren zur Herstellung von feinstrukturierten beschichteten Oberflächen beschrieben. Diese liegen mindestens bei 0,5, bevorzugt mindestens 0,7, besonders bevorzugt mindestens 0,9, ganz besonders bevorzugt mindestens 1, insbesondere mindestens 1,3 und speziell mindestens 1,5.

Die obere Grenze für das Aspektverhältnis liegt davon unabhängig bevorzugt bei 100, 50, 20, 15, 10 oder 5.

Im letzten Schritt d) wird die gehärtete Beschichtung von der Matrize getrennt. Falls das Substrat die Matrize enthielt kann es von Vorteil sein, dass vor dem Abtrennen auf die gehärtete Beschichtung ein Substrat aufgebracht wird, gegebenenfalls unter Verwendung einer Haftvermittlerschicht.

Die Matrize kann aus unterschiedlichen Materialien bestehen. Dies können weiche Materialien sein, wie beispielsweise Polydimethylsiloxan (PDMS). Es können aber auch harte Materialien sein, wie beispielsweise Metalle, bevorzugt Nickel.

In einer weiteren Ausführungsform ist die Matrize eine Matrize einer hierarchischen Feinstruktur, bevorzugt einer hierarchischen Mikrostruktur. Dies sind Strukturen, welche Elemente mit verschiedenen Größenordnungen enthalten, z.B. eine Strukturierung in der Größenordnung von mehreren Mikrometern, beispielsweise 2 bis 20 µm, welche von einer Strukturierung im Bereich von unter einem Mikrometer, beispielsweise 200 nm bis 1 µm, überlagert wird (Hierarchie). Meistens ist die kleinere Struktur in der größeren Struktur enthalten. So weist die Beschichtung beispielsweise Vertiefungen oder Erhöhungen in der Größenordnung von mehreren Mikrometern auf, z.B. als Zylinder, oder Kegelstumpf, der gegebenenfalls eine konkave Mantelfläche aufweisen kann, welche auf ihren Stirnflächen wiederum Vertiefungen oder Erhöhungen aufweisen, welche naturgemäß deutlich kleiner sind. Charakterisiert werden solche Strukturen meistens über den Unterschied der Größenordnung in Bezug auf mindestens eine ihrer Dimensionen, bevorzugt in mindestens einer Richtung parallel zur Oberfläche des Substrats. In der Regel lässt sich die Größenordnung einer periodischen Strukturierung durch Peri-ode dieser Struktur, d.h. der kürzeste Abstand bis sich die Struktur wiederholt, festlegen. Die Größenordnung der Struktur ergibt sich aus der kürzesten Periode. Bevorzugte hierarchische Strukturen weisen einen Unterschied der Größenordnungen der einzelnen Hierarchiestufen um einen Faktor von 2 bis 1.000 auf, bevorzugt von 2 bis 100, besonders bevorzugt zwischen 2 und 20.

Des Weiteren kann das Verfahren die Herstellung einer Matrize zur Herstellung von Feinstrukturen auf Oberflächen umfassen. Mit Vorteil handelt es sich bei den Feinstrukturen um Mikrostrukturen.

Zuerst wird ein Photolack auf mindestens ein Matrizensubstrat aufgetragen. Verwendbare Matrizensubstrate sind vorzugsweise Edelmetalle, oxidische Gläser, mono- oder multikristalline Matrizensubstrate, Halbleiter, Metalle mit oder ohne passivierter Oberfläche, Kunststoffe oder allgemein Substrate mit hoher Resistenz gegen die nachfolgenden Prozeduren. Insbesondere handelt es sich hierbei um Pt, Au, GaAs, In_{Y}GaAs, AlₓGaAs, Si, Glas, Graphit, Diamant, Glimmer, SrTi03 sowie deren dotierte Modifikationen. Die verwendbaren Matrizensubstrate können sowohl planare, ebene Matrizensubstrate als auch solche mit planaren, gekrümmten (konvex oder konkav) Oberflächen sein.

Ein glattes Matrizensubstrat kann z.B. durch Spin-Coating mit einem Photolack beschichtet werden. Die Dicke des Films kann dabei zwischen 10 nm und 1.000 µm betragen. Bevorzugt sind Dicken von 1 µm bis 500 µm, besonders bevorzugt zwischen 5 µm und 50 µm. Die Dicke der Schicht bestimmt dabei die maximale Höhe der späteren Struktur der Matrize. Bei besonders feinen Strukturen kann die Dicke der Schicht auch zwischen 10 nm und 1 µm betragen.

Zusätzlich kann auf das Matrizensubstrat ein haftvermittelndes oder antireflektives Material aufgetragen werden, z.B. Wide 15 B (Brewer Science).

Ein Photolack ist ein Material, welches seine Löslichkeit in einem Lösungsmittel in Abhängigkeit der eingestrahlten Dosis an Strahlung ändert (Photolack/Photoresist). Als Photolacke können die im Stand der Technik bekannten, im Handel erhältlichen Photolacke eingesetzt werden. Dabei kann sich die Löslichkeit der belichteten Bereiche erhöhen (positive Photolacke) oder erniedrigen (negativer Photolack). Dabei kann dies auch die Löslichkeit des Photolacks nach Trocknungs- und/oder Backschritten betreffen.

Dies kann beispielsweise ein auf DNQ (Diazonaphtochinon) basierender Photolack (z.B. AZ9260 von AZ Electronic Material) sein. Es kann aber auch ein auf Epoxiden basierender Photolack wie SU-8 (Microchem. Corp.) sein.

Gegebenenfalls kann noch ein Trocknungsschritt zur Erhöhung der Viskosität des aufgetragenen Photolacks durchgeführt werden. Dies kann durch einfaches Lagern bei Raumtemperatur, beispielsweise bei Luftfeuchten über 40% relative Luftfeuchte, oder durch Backprozesse, vorzugsweise auf einer Heizplatte erfolgen.

In dem nächsten Schritt wird der Photolack mit sichtbarem Licht, UV-Strahlung, Röntgenstrahlung oder Elektronenstrahlung selektiv belichtet.

Die Belichtung kann auf herkömmliche Weise durch Masken oder bevorzugt durch Interferenz erfolgen (Interferenzlithographie). Dabei wird durch Interferenz von mehreren kohärenten Strahlungsquellen die gewünschte Intensitätserteilung in der zu belichteten Zusammensetzung erzeugt. Dies kann durch die Interferenz von mindestens zwei vorzugsweise zwei bis vier elektromagnetischen Wellen geschehen, deren Wellenlänge im Sensitivitätsbereich des verwendeten Materials liegt. Die Belichtung kann auch mehrfach durchgeführt werden. Entscheidend ist, dass nach der Belichtung die gewünschte flächige Dosisverteilung erreicht wurde. So kann die Belichtung auch mehrfach bei unterschiedlicher Substratposition und/oder Ausrichtung erfolgen. Durch Interferenz von mehreren Lichtquellen können insbesondere regelmäßige Muster erzeugt werden. So ist es beispielsweise möglich durch Interferenz von drei Lichtquellen ein hexagonales Intensitätsmuster zu erzeugen.

Durch Interferenzlithographie ist es möglich Flächen von über 1 m² in einem Schritt zu belichten.

In einer weiteren Ausführungsform wird in den Photolack die Struktur durch Aufdrücken einer Vorlage, z.B. eines Stempels, geprägt (Mikroreplikation). Die Vorlage kann ihrerseits durch Abguss einer mit dem Verfahren der Anmeldung hergestellten Matrize erhalten worden sein.

Gegebenenfalls kann auf die Schicht eine weitere Schicht eines Photolacks aufgetragen werden, welche wiederum durch selektives Belichten oder Prägen erneut mit einer Struktur versehen wird.

Das Verfahren eignet sich besonders zur Herstellung von hierarchischen Strukturen. Dazu wird bei jeder Wiederholung eine Struktur einer anderen Größenordnung erzeugt.

Mit Vorteil wird bei jeder Wiederholung eine Struktur mit zunehmender Größenordnung erzeugt. Dies führt dazu, dass Matrizen für Strukturen erhalten werden, welche aufeinander aufgesetzte Strukturen von abnehmender Größenordnung beinhalten, d.h. beispielsweise zylinderförmige Sockel auf deren Stirnflächen wiederum zylinderförmige Vorsprünge mit einer deutlich kleineren Größenordnung angeordnet sind.

Die erhaltenen Schichten werden anschließend entwickelt, d.h. es wird entweder der belichtete Teil aus dem Film herausgelöst (positiver Photolack) oder der unbelichtete Photolack wird aus dem Film herausgelöst (negativer Photolack). Die eingeschriebenen Muster und Strukturen stellen Vertiefungen in dem Photolack dar. Hierbei können die Strukturen periodisch oder aperiodisch sein. Die Strukturen können laterale Strukturdimensionen im Bereich zwischen 30 nm und 50 µm und eine Strukturhöhe von bis zu 100 µm, beispielsweise zwischen 50 nm und 100 µm, aufweisen.

Die Entwicklung erfolgt in Abhängigkeit von dem verwendeten Photolack, wie z.B. Kalilauge. Dabei kann die Stärke des Entwickelns, auch die Profilform und/oder Tiefe der fertigen Struktur durch die Konzentration der Entwicklerlösung und die Entwicklungszeit eingestellt werden.

Durch genaues Einstellen der Trocknungsschritte vor dem Belichten und der Entwicklungsparameter kann bei DNQ/Novolac Resisten erreicht werden, dass sich auf der Struktur ein verbreitertes Plateau ausbildet. Dieses im Kontext von Photoresist genannte T-Topping wirkt sich besonders vorteilhaft auf die Adhäsionseigenschaften aus.

Mit Vorteil werden alle aufgetragenen Schichten gemeinsam entwickelt, bevorzugt werden alle durch Belichtung strukturierten Schichten gleichzeitig entwickelt. Damit werden mit einem Entwicklungsschritt die hierarchisch strukturierten Vertiefungen erhalten.

Es können auch noch weitere Schritte, wie zusätzliche Trocknungsschritte und Beschichtungsschritte enthalten sein.

Das Verfahren eignet sich insbesondere um hierarchische Strukturen mit einer Sockelstruktur herzustellen. Dazu wird in den ersten Schritten durch Interferenzlithographie und/oder Mikroreplikation das Negativ einer Fein- oder Mikrostruktur hergestellt. In der durch Abformung der Matrize hergestellten strukturierten Oberfläche bildet dieser Bereich die Kontaktstruktur der strukturierten Oberfläche, d.h. der Bereich der strukturierten Oberfläche, welcher die Adhäsion durch Kontaktierung beeinflusst.

Das Verfahren ermöglicht nun in einem letzten Schritt auf einfache Weise die Kontaktstruktur auf eine Sockelstruktur aufzusetzen. Dadurch kann die Adhäsionsfähigkeit der Oberfläche verbessert werden.

Zur Erzeugung einer Sockelstruktur kann es zunächst nötig sein, die Schichten der Matrize für die Kontaktstruktur zu trocknen oder zu härten.

Danach wird eine weitere Schicht Photolack aufgebracht, in welche die Sockelstruktur belichtet werden soll. Die Dicke der aufgebrachten Schicht bestimmt dabei die spätere Höhe der Sockel. Mit Vorteil ist sie mehr als 2 mal so dick wie die Schichten der Kontaktstruktur, mit Vorteil mehr als 5 mal so dick (gemessen beim Auftragen des Photolacks).

Im nächsten Schritt wird der Photolack mittels Interferenzlithographie belichtet. Mit Vorteil wird dabei ein hexagonales Intensitätsmuster verwendet.

Dabei wird die Größenordnung der Sockelstruktur so gewählt, dass sie mindestens 1.5 mal, bevorzugt mehr als 2 mal größer ist, als die größte Größenordnung der Kontaktstruktur. Dies bedeutet beispielsweise im Falle von zylindrischen Strukturen als Kontaktstruktur und Sockelstruktur, dass der Durchmesser der Sockelstruktur mindestens 5mal größer ist, als der größte Durchmesser einer Struktur der Kontaktstruktur.

Nach dem Belichten werden die Schichten gehärtet und/oder temperaturbehandelt.

Mit Vorteil eignet sich das Verfahren zur Herstellung von Strukturen mit einem Seitenverhältnis (Höhe zu Durchmesser) zwischen 1:10 bis 10:1 bevorzugt zwischen 3:1 und 1:3, sowie denen für die feinstrukturierte Oberfläche beschriebenen Seitenverhältnissen. Diese Seitenverhältnisse gelten für die jeweilige Hierarchiestufe.

Im letzten Schritt werden alle Schichten gemeinsam entwickelt. Dabei bildet sich die Matrize. Die Matrize wird bevorzugt in dem bereits beschriebenen Verfahren zur Herstellung von strukturierten Oberflächen verwendet.

Die erhaltene Matrize kann auch in einem Elastomer, z.B. Silikon, Polydimethylsiloxan (PDMS), Sylgard®184, elastisches Polyurethan, PolyOptic®1470 von PolyConForm oder Nickel abgeformt werden.

Bei dem vorstehend beschriebenen Prozess kann auch ausschließlich mit Interferenzbelichtungen gearbeitet werden.

Mit Vorteil wird ein negativer Photolack verwendet.

Das Verfahren kann auch mit einer Kombination von Interferenzlithographie und Mikroreplikation durchgeführt werden. So kann beispielsweise die Herstellung des Negativs der Kontaktstruktur durch Prägen erfolgen.

Dazu kann beispielsweise ein Matrizensubstrat mit einem Haftvermittler beschichtet werden. Danach wird das Matrizensubstrat mit einem positiven Photolack beschichtet (z.B. auf DNQ/Novolac Basis). Nach Trocknung wird diese Schicht belichtet und die erhaltene Struktur entwickelt. Die erhaltene Struktur wird mit einem Elastomer abgeformt. Um das korrekte Positiv der Struktur zu erhalten kann es erforderlich sein, das erhaltene Elastomer erneut mit einem weiteren Elastomer abzuformen.

Diese abgeformte Struktur kann als Stempel zur Formung der Matrize für das Negativ der Kontaktstruktur verwendet werden.

Danach werden wie bereits beschrieben auf die geprägte Struktur weitere Strukturen aufgebracht, bevorzugt wird die Sockelstruktur erzeugt.

Die Verwendung eines Prägeschrittes zur Herstellung der Kontaktstruktur hat den Vorteil, dass ein solcher aus einem Elastomer hergestellter Stempel für viele Prägungen verwendbar ist. Dadurch kann das Herstellungsverfahren der Matrizen deutlich beschleunigt werden.

Das beschriebene Verfahren hat den Vorteil, dass es nur wenige Schritte bedarf und die Schichten nacheinander einfach aufgetragen und strukturiert werden. Danach können alle Schichten gemeinsam entwickelt werden.

Das Verfahren ermöglicht auch eine sehr einfache Herstellung der Matrizen für hierarchische Strukturen. Dies wird insbesondere dadurch erreicht, dass es aufgrund der gemeinsamen Entwicklung am Ende des Verfahrens nicht zwingend notwendig ist, das Negativ der Kontaktstruktur auf die Sockelstruktur auszurichten.

Als negativer Photolack kann ein epoxidischer Photolack wie SU-8 verwendet werden.

Mit Vorteil werden die Matrizen vor der Verwendung inertisiert. Dies kann durch eine Beschichtung mit Substanzen geschehen, welche auf der Oberfläche inertisierende Gruppen aufbringen. Dies kann durch ionische oder polare Bindungen (beispielsweise Wasserstoffbrücken, Karbonsäuregruppen, Amine, Alkylamine, Amide, Imine, Imide, Ketone, Thiole, Cyanide, Ether), Dipol-Dipol-Wechselwirkungen (beispielsweise aromatische Gruppen) oder kovalente Bindungen (beispielsweise Ester, Ether, Si-O-Bindungen).

Die inertisierenden Gruppen sind Gruppen, welche eine geringe Wechselwirkung mit anderen Oberflächen aufweist. Dies sind beispielsweise unsubstituierte oder mehrheitlich substituierte Kohlenwasserstoffgruppen. Diese Gruppen können auch ungesättigte oder aromatische Kohlenwasserstoffgruppen enthalten.

Beispiele für unsubstituierte Gruppen sind beispielsweise verzweigte oder unverzweigte Kohlenwasserstoffe mit mehr als 5 Kohlenstoffatomen, bevorzugt zwischen 5 und 30 Kohlenstoffatomen. Es kann sich auch um aromatische Gruppen handeln, d.h. Gruppen, welche ein oder mehrere aromatische Systeme aufweisen.

Mit Vorteil weisen intertisierende Gruppen Fluoratome auf, mit Vorteil sind mehr als 50% der Positionen für Wasserstoffatome durch Fluoratome substituiert sind, bevorzugt mehr als 60%, besonders bevorzugt mehr als 70%. Bevorzugt handelt es sich um perfluorierte Gruppen, welche allerdings 0 bis 4 Kohlenstoffatome aufweisen könne, welche nicht fluoriert sind, z.B. 1H, 1H, 2H, 2H-Perfluorogruppen. Die Verbindungen können perfluorierte Karbonsäuren sein. Bevorzugt sind Silane, welche entsprechende Gruppen aufweisen und zusätzlich noch mindestens eine hydrolysierbare Gruppe, welche eine kovalente Bindung mit der Matrize ausbilden kann. Beispiele für solche Silane sind CF₃CH₂CH₂SiCl₂(CH₃), CF₃CH₂CH₂SiCl(CH₃)₂, CF₃CH₂CH₂Si(CH₃)(OCH₃)₂, CF₃CH₂CH₂SiX₃, C₂F₅CH₂CH₂SiX₃, C₄F₉CH₂CH₂SiX₃, n-C₆F₁₃CH₂CH₂SiX₃, n-C₈F₁₇CH₂CH₂SiX₃, n-C₉F₂₁CH₂CH₂SiX₃(X=OCH₃, OC₂H₅ oder CI); i-C₃F₁₀-CH₂CH₂CH₂-SiCl₂(CH₃), n-C₆F₁₃-CH₂CH₂-SiCl(OCH₂CH₃)₂, n-C₆F₁₃-CH₂CH₂-SiCl₂(CH₃) und n-C₆F₁₃-CH₂CH₂-SiCl(CH₃)₂. Besonders bevorzugt sind CF₃CH₂CH₂SiX₃, C₂F₅CH₂CH₂SiX₃, C₄F₉CH₂CH₂SiX₃, n-C₆F₁₃CH₂CH₂SiX₃, n-C₈F₁₇CH₂CH₂SiX₃, n-C₉F₂₁CH₂CH₂SiX₃(X=OCH₃, OC₂H₅ oder Cl).

Mit dem zuvor beschriebenen Verfahren können strukturierte Oberflächen hergestellt werden. Dabei weisen diese strukturierten Oberflächen Vorsprünge in regelmäßiger Anordnung mit Abständen im Bereich von 5 µm bis 50 µm auf. Die Vorsprünge können beliebig geformt sein. So kann es sich um eine eindimensionale Anordnung handeln. Dies bedeutet, dass die Vorsprünge in eine Richtung entlang der Oberfläche eine deutlich verlängerte Ausdehnung aufweisen als in den anderen Richtungen. Dies ist beispielsweise der Fall, wenn die Oberfläche mit Rillen strukturiert ist. Die Vorsprünge der Oberfläche weisen auf ihrer Oberfläche wiederum Vorsprünge in regelmäßiger Anordnung mit Abständen im Bereich von 0,1 µm bis 3 µm auf.

Bei den Vorsprüngen kann es sich um zylindrische Formen, Kegel, stumpfe Kegel, Kreisscheiben oder Kombinationen davon handeln. Solche Formen können beispielsweise auch Kegel sein, auf deren Spitze sich eine Kreisscheibe befindet, welche bevorzugt parallel zur Oberfläche ausgerichtet ist. Man erhält auf diese Weise eine pilzförmige Struktur. Mit Vorteil weist die Struktur bezogen auf die maximalen Ausdehnungen eines Vorsprungs ein Seitenverhältnis von Höhe zu Durchmesser zwischen 1:10 bis 10:1 bevorzugt zwischen 3:1 und 1:3 oder 2:1 und 2:1 auf. Solche Strukturen werden auch als T-Toppings bezeichnet.

Die Größenordnungen, d.h. Höhe und Breite, der Vorsprünge liegen dabei im Bereich von 1 µm bis 50 µm, besonders bevorzugt im Bereich von 2 bis 20 µm.

Festkörper mit solch einer strukturierten Oberfläche können in allen Bereichen verwendet werden, wo eine Adhäsion zwischen Oberflächen kontrolliert werden soll. Solche Oberflächen können als Haftflächen bei allen Bereichen der Technik vorgesehen sein, bei denen Verbindungen zwischen verschiedenen Objekten hergestellt werden sollen. Sie können Saug-, Klett- und Magnethalterungen ersetzen.

Diese Oberflächen sind einfach herzustellen und daher auch großflächig auf Oberflächen aufbringbar, beispielsweise auch durch Bekleben dieser Oberfläche mit einer entsprechend strukturierten Folie.

Gemäß einer bevorzugten Ausführungsform der vorliegenden Erfindung weisen die Kontaktflächen der beiden Festkörper die gleiche Feinstrukturierung auf. Bei dieser Ausführungsform ergeben sich Vorteile hinsichtlich des Herstellungsprozesses, da lediglich ein Prägewerkzeug benötigt wird, so dass insgesamt die Komplexität in der Herstellung verringert wird.

In einer anderen bevorzugten Ausführungsform können die Kontaktflächen der beiden Festkörper unterschiedliche Feinstrukturierungen aufweisen. Auch bei dieser Ausführungsform ergeben sich Vorteil in Bezug auf den Herstellungsprozess. So ist es beispielsweise möglich zur Herstellung der Feinstrukturierung ein Beschichtungsmittel zu verwenden, welches nach der Aushärtung eine raue Oberfläche aufweist, die als Feinstrukturierung fungiert. Des Weiteren kann diese Ausführungsform vorteilhaft sein, da auch Prägewerkzeuge mit einer zufälligen Geometrie verwendet werden können, wenn nicht zwei aufeinander abgestimmte Feinstrukturierungen benötigt werden.

Im Allgemeinen können über die Art der Feinstrukturierung die Peel- und die Scherkräfte beeinflusst werden. Weisen die Kontaktflächen der beiden Festkörper die gleiche Feinstrukturierung auf, so sind die Peel- und Scherkräfte geringer im Vergleich zu zwei Festkörpern, die an ihren Kontaktflächen unterschiedliche Feinstrukturierungen aufweisen. Durch diesen sehr einfachen Steuerungsmechanismus können die Peel- und Scherkräfte auf die entsprechenden Anforderungen in der jeweiligen Industrie angepasst werden. So ist es möglich, dass die Feinstrukturierungen entsprechend ihrem Verwendungszweck aufeinander abgestimmt werden. So kann beispielsweise die Oberfläche eines permanent vorhandenen Festkörpers, wie z. B. einer Wand, eines Fußbodens etc., mit Feinstrukturierung versehen werden, die besonders stabil und belastbar sind. Die Oberfläche eines beweglichen Festkörpers dagegen kann eine Feinstrukturierung aufweisen, die beispielsweise die Hafteigenschaften verbessert.

In einer bevorzugten Ausführungsform der Erfindung ist der erste Festkörper eine Wand oder eine Decke eines Raumes und der zweite Festkörper eine Tapete. Bei dieser Ausführungsform werden vorteilhaft die Wände bzw. die Decken mit einer feinstrukturierten Folie beklebt. Hiernach kann problemlos eine auf ihrer Rückseite feinstrukturierte Tapete durch einfaches Andrücken oder Anwalzen aufgebracht werden. Die Tapete kann eine Papier-, Vinyl-, Stoff- oder Metalltapete sein. Bei Bedarf kann die Tapete zu Renovierungszwecken leicht rückstandsfrei abgezogen werden und durch eine neue, entsprechend strukturierte Tapete bzw. durch eine bereits verwendete, entsprechend strukturierte Tapete ersetzt werden.

In gleicher Weise können auch Bodenbeläge erfindungsgemäß auf dem Boden eines Raumes befestigt werden. In diesem Fall wird ebenfalls eine strukturierte Folie auf den Boden des Raumes verklebt und anschließend können auf Ihrer Rückseite feinstrukturierte Bodenbeläge aufgebracht werden. Hierbei kann es sich bspw. um Holzdielen, Parkett, Korkboden, Laminat, Vinylboden, Natur- und Kunststeinbodenbeläge oder um keramische Fliesen handeln. Bei den so verlegten Bodenbelägen ist ebenfalls ein sauberer und problemloser Austausch möglich.

Weiterhin können vorteilhaft die Oberflächen von Möbelstücken erfindungsgemäß mit einer Dekorfolie oder einem Furnier verkleidet werden. In diesem Fall ist der erste Festkörper ein Möbelstück und der zweite Festkörper eine Dekorfolie oder ein Funier.

Weiterhin können vorteilhaft die Fassaden von Gebäuden mit einer Schutz- oder Dekorfolie geschützt bzw. verkleidet werden. In diesem Fall ist der erste Festkörper eine Fassade eines Gebäudes und der zweite Festkörper eine Schutz- oder Dekorfolie.

Weiterhin können vorteilhaft die Fensterrahmen mit einer Schutz- oder Dekorfolie geschützt bzw. verkleidet werden. In diesem Fall ist der erste Festkörper ein Fensterrahmen und der zweite Festkörper eine Schutz- oder Dekorfolie.

Im Folgenden wird die Erfindung anhand von Ausführungsbeispielen näher erläutert.

| | |
|---|---|
| **PET** | Polyethylenterephtalat; |
| **Laromer UA 9072** | aliphatisches Polyurethanacrylat, 70% in Laromer TBCH, Funktionalität 1,7, Viskosität (60°C) 2-15 Pa*s gemäß Herstellerangaben (BASF SE); |
| **Laromer TBCH** | 4-*tert*-Butylcyclohexylacrylat, Funktionalität 1, Viskosität (23 °C) 9 Pa*s gemäß Herstellerangaben (BASF SE); |
| **Laromer POEA** | Phenoxyethylacrylat, Funktionalität 1, Viskosität (23°C) 8 Pa*s gemäß Herstellerangaben (BASF SE); |
| **Lucirin TPO-L** | 2,4,6-Trimethylbenzoyl-diphenylphosphinate; |
| | Photoinitiator der BASF SE |

In den nachfolgenden Beispielen wird der Verbund aus einem ersten Festkörper und einem zweiten Festkörper durch die Komponenten A und B dargestellt.

Bei der unbeschichteten PET-Folie handelt es sich um eine Melinex ST 502 Folie der Firma DuPont Teijin Film.

### Beispiel 1: Herstellung einer strukturierten Kunststofffolle durch Prägen in einem Rolle-zu-Rolle-Druckverfahren gemäß der WO 2012/004319 A1

Ein PET-Film (Melinex ST 502) als Trägerfolie (Substrat) wurde auf einer Rolle-zu-Rolle Druckmaschine abgerollt und eine Dispersion aus 50 g Laromer UA 9072, 50 g Laromer POEA und 3,5 g Lucirin TPO-L über eine Gravur-Walze mit einer Nassschichtdicke von 20 g/m² (entspricht 20 µm) auf den PET-Film aufgebracht. Anschließend wurde die PET-Folie mit dem Beschichtungsmittel in Kontakt mit einer Prägewalze aus Nickel, welche die Negativstruktur der Feinstruktur trägt, gebracht. Der PET-Film wurde gegen die Prägewalze gepresst, so dass das Beschichtungsmittel in die Kavitäten der Feinstruktur fließen konnte. Während die Prägevorrichtung in Kontakt mit dem Beschichtungsmittel war, erfolgte die Aushärtung der Beschichtungsmasse durch eine UV-Quecksilberlampe (Intensität 60% bei einer Bahngeschwindigkeit von 8 m/min). Anschließend wurde die ausgehärtete Beschichtungsmasse mit der Zielstruktur von der Prägevorrichtung getrennt und die strukturierte Folie aufgewickelt. Während des ganzen Prozesses befand sich das Beschichtungsmittel in Kontakt mit der Trägerfolie.

### Beispiele 2: Herstellung einer unstrukturierten, beschichteten Kunststofffolie

Eine Dispersion aus 50 g Laromer UA 9072 wurde mit 50 g Laromer POEA und 3,5 g Lucirin TPO-L versetzt und mit einer 24 µm Spiralrakel mit einer Nassschichtdicke von 24 g/m² (entspricht 24 µm) auf eine PET-Folie (Melinex ST 502, 75 µm) aufgetragen. Anschließend wurde die Beschichtungsmasse mit einer UV-Bandanlage gehärtet (Galium / Quecksilberstrahler; Bandgeschwindigkeit 30 m/s; UV A 327 W/cm², UV B 269 W/cm², UV C 77 W/cm², UV V 212 W/cm²).

### Erzeugung des erfindungsgemäßen Verbunds aus zwei Festkörpern sowie Referenzbeispiele

Gemäß der nachstehenden Tabelle wurden unterschiedliche Verbünde aus zwei Festkörpern hergestellt und jeweils die Peel-Kräfte sowie die dynamische Scherfestigkeit bestimmt. Beispiel 4 der nachfolgenden Tabelle stellt einen erfindungsgemäßen Verbund dar. Zur Herstellung der Verbünde wurden entsprechende Folienstücke mit einer Größe von 5x15 cm für die Messung der Peel-Kräfte und mit einer Größe von 8x5 cm für die Messung der Scherkräfte miteinander in Kontakt gebracht.

| **Nr.** | **Verbund aus zwei Festkörpern** | | **Peel-Kräfte** | **Dynamische Scherfestigkeit** |
|---|---|---|---|---|
| | | | **Abzieh-prüfung [N]** | **Twist-o-meter (TOM)** |
| 1 | Komponente A | Unbeschichtete PET-Folie | Min: 0,41 | Haftwirkung zu gering und nicht messbar |
| | | | Max: 0,48 | |
| | Komponente B | Strukturierte Folie gemäß Beispiel 1 | Mittelw: 0,44 | |
| 2 | Komponente A | Unbeschichtete PET-Folie | Folien können nicht voneinander getrennt werden. Während der Abziehprüfung reißen die Folien. | Haftwirkung ist größer als die Leistung des Messgerätes. Messstempel mit Kleber reißt von der Oberfläche ab.* |
| | Komponente B | Unstrukturierte Folie gemäß Beispiel 2 | | |
| 3 | Komponente A | Strukturierte Folie gemäß Beispiel 1 | Keine homogene Haftwirkung über die gesamte Oberfläche. In den Bereichen, in denen eine Haftung gegeben ist, kommt es zu einer Zerstörung der Struktur, sobald die Folien voneinander getrennt werden. | Haftwirkung ist größer als die Leistung des Messgerätes. Messstempel mit Kleber reißt von der Oberfläche ab.* |
| | Komponente B | Unstrukturierte Folie gemäß Beispiel 2 | | |
| 4 | Komponente A | Strukturierte Folie gemäß Beispiel 1 | Min: 1,11 | Haftwirkung ist größer als die Leistung des Messgerätes. Messstempel mit Kleber reißt von der Oberfläche ab.* |
| | | | Max: 1,45 | |
| | Komponente B | Strukturierte Folie gemäß Beispiel 1 | Mittelw: 1,28 | |

| | | | | |
|---|---|---|---|---|
| *Zugkräfte und Torrosionskräfte von > 6N/mm² sind nötig, um den Folienverbund voneinander zu trennen | | | | |

Die dynamische Scherfestigkeit der oben dargestellten Verbünde wurde mit Hilfe von Twist-O-Meter-Messungen gemäß DIN SPEC 91063 (Stand Juli 2011) bestimmt. Dazu wurde die unstrukturierte Seite der Komponente A mit einem Stahlblech verklebt. Mit Hilfe von Twist-O-Meter-Messungen an Mehrschichtsystemen lässt sich die Haftfestigkeit (sowohl an den Grenzflächen als auch innerhalb einer Schicht) unter Scherbeanspruchung charakterisieren. Auf die Oberfläche der Probe wird zunächst ein Stempel aufgeklebt, der während der Messung mit kontinuierlich zunehmendem Drehmoment gedreht. Dabei wird die beim Abdrehen eines aufgeklebten Stempels im Moment des Bruchs auftretende Kraft ermittelt und daraus die Haftfestigkeit (Torsionsfestigkeit) in N/mm² berechnet.

Die Peel-Kräfte der oben dargestellten Verbünde wurden mit Hilfe einer Universalprüfmaschine (Zugprüfmaschine 3 kN des Herstellers Coesfeld) durchgeführt. Dazu wurden die jeweiligen Enden der Folien des präparierten Folienverbunds jeweils in eine Spannbacke der Zugprüfmaschine eingespannt. Dann wurden die Spannbacken in einem Winkel von 180° zueinander über eine Strecke von 200 mm mit einer Geschwindigkeit von 100 mm/min auseinandergezogen. Die Kraft, die für das Auseinanderziehen benötigt wurde, wurde über eine Kraftmesszelle aufgezeichnet.

## Patentansprüche

1. Verbund aus einem ersten Festkörper und einem zweiten Festköper, die über eine Kontaktfläche adhäsiv miteinander verbunden sind, wobei die Adhäsion durch eine oberflächige Feinstrukturierung bewirkt wird, die herstellbar ist durch ein Verfahren zur Herstellung von feinstrukturierten beschichteten Oberflächen mit einem Aspektverhältnis von mindestens 0,5 zur Beeinflussung der Adhäsion umfassend die Schritte
a) Auftragen mindestens einer Beschichtungsmasse auf mindestens ein Substrat;
b) Formen einer Feinstruktur durch eine Matrize, die das Negativ einer Feinstruktur aufweist, wobei
b1) die Matrize gegen die Beschichtungsmasse auf dem Substrat gedrückt wird oder
b2) das Substrat aus Schritt a) die Matrize enthält;
c) Härten der so erhaltenen feinstrukturierten Beschichtungsmasse unter Erhalt einer im Wesentlichen gehärteten Beschichtung;
d) Trennen der feinstrukturierten Beschichtung von der Matrize, wobei die Schritte d) und c) auch in umgekehrter Reihenfolge durchgeführt werden können, und
wobei
- die Beschichtungsmasse in lösungsmittelfreiem Zustand vor dem Auftragen auf das Substrat eine Viskosität [Rotationsviskosimetrie nach DIN 53018-1 mit Platte/Kegel-Geometrie bei 25°C; Temperierung: Peltier; Messeinrichtung: HC 60/1 bei einem Schergefälle D von 10 - 1.000 1*s-1] unter 10 Pas und
- die gehärtete Beschichtung ein E-Modul [Indentation mit Berkovich Spitze, Vorlast zwischen 0,1 und 1 mN je nach Modul der zu bestimmenden Probe; Eindrückzeit: 10 s; Haltezeit 30 s und Rückzugzeit 10 s, Kalibrierung auf Polycarbonat] von mindestens 1 und bis zu 1000 MPa aufweist,
**dadurch gekennzeichnet, dass** die Kontaktfläche des ersten Festkörpers und die Kontaktfläche des zweiten Festkörpers die Feinstrukturierung aufweisen.

2. Verbund nach Anspruch 1, **dadurch gekennzeichnet, dass** die Kontaktfläche des ersten Festkörpers und die Kontaktfläche des zweiten Festkörpers die gleiche Feinstrukturierung aufweisen.

3. Verbund nach Anspruch 1, **dadurch gekennzeichnet, dass** die Kontaktfläche des ersten Festkörpers und die Kontaktfläche des zweiten Festkörpers eine unterschiedliche Feinstrukturierung aufweisen.

4. Verbund nach Anspruch 1 bis 3, **dadurch gekennzeichnet, dass** der erste Festkörper eine Wand oder Decke eines Raumes und der zweite Festkörper eine Tapete ist.

5. Verbund nach Anspruch 1 bis 3, **dadurch gekennzeichnet, dass** der erste Festkörper der Boden eines Raumes ist und der zweite Festkörper ein Bodenbelag ist.

6. Verbund nach Anspruch 1 bis 3, **dadurch gekennzeichnet, dass** der erste Festkörper ein Möbelstück und der zweite Festkörper eine Dekorfolie oder ein Furnier ist.

7. Verbund nach Anspruch 1 bis 3, **dadurch gekennzeichnet, dass** der erste Festkörper eine Fassade eines Gebäudes und der zweite Festkörper eine Schutz- oder Dekorfolie ist.

8. Verbund nach Anspruch 1 bis 3, **dadurch gekennzeichnet, dass** der erste Festkörper ein Fensterrahmen und der zweite Festkörper eine Schutz- oder Dekorfolie ist.

9. Verbund nach Anspruch 1 bis 8, **dadurch gekennzeichnet, dass** die Beschichtungsmasse strahlungshärtbar ist.

10. Verbund nach Anspruch 9, **dadurch gekennzeichnet, dass** es sich bei den strahlungshärtbaren Beschichtungsmassen um Acrylsäureester, Methacrylsäureester oder ungesättigte Polyesterharze handelt.

11. Verbund nach Anspruch 9, **dadurch gekennzeichnet, dass** es sich bei den strahlungshärtbaren Beschichtungsmassen um Polyester-, Polyether-, Carbonat-, Epoxy- oder Urethan(meth)acrylate handelt, die optional teilweise aminmodifiziert sein können.
